# EUROPEAN PATENT SPECIFICATION

(11) **EP 2 736 914 B1**
(45) Date of publication and mention of the grant of the patent: **06.07.2016**
(21) Application number: 12741330.0
(22) Date of filing: 30.07.2012
(51) Int. Cl.: C07F 9/30, C07F 9/38, C07F 9/40, C07F 9/42, C07F 9/53, C07F 9/655, C07F 9/6571, C07F 9/6584

(54) **METHOD FOR THE MANUFACTURE OF COMPOUNDS CONTAINING AN ALPHA-OXY PHOSPHORUS GROUP BY USING P-X COMPONENTS**
VERFAHREN ZUR HERSTELLUNG VON VERBINDUNGEN MIT EINER ALPHA-OXY-PHOSPHORGRUPPE MITTELS P-X-KOMPONENTEN
PROCÉDÉ DE FABRICATION DES COMPOSÉS CONTENANT UN GROUPE DE PHOSPHORE ALPHA-OXY PAR L'UTILISATION DE COMPOSANTS P-X

(30) Priority: 29.07.2011 EP 11175978
(43) Date of publication of application: 04.06.2014
(73) Proprietor: Straitmark Holding AG, 6300 Zug (CH)
(72) Inventor: BURCK, Sebastian, R., W., 1348 Louvain-La-Neuve (BE); NOTTÉ, Patrick, 1300 Wavre (BE)
(74) Representative: Rippel, Hans Christoph
(86) International application number: PCT/EP2012/064881
(87) International publication number: WO 2013/017564

(56) References cited:
- DE-A1- 19 708 722
- GAZIZOV M ET AL: "INVESTIGATION OF REACTIONS OF CHLORIDES OF 3-COORDINATE PHOSPHORUS WITH ACETIC ACID MONOCYCLALA LS BY MEANS OF DTA AND P NMR", JOURNAL OF GENERAL CHEMISTRY USSR, CONSULTANTS BUREAU, NEW YORK, NY, US, vol. 48, 1 January 1978 (1978-01-01), pages 1802-1806, XP008147530, ISSN: 0022-1279
- PALLIICHUK Y ET AL: "[-ALKOXY-2-(ALKOXYCARBONYL)-2-HALOETHYL]- AND [1-ALKOXY-2-(ALKOXYCARBONYL)-2,2-DIHALOETH YL]-PHOSPHONIC DIHALIDES", JOURNAL OF GENERAL CHEMISTRY USSR, CONSULTANTS BUREAU, NEW YORK, NY, US, vol. 57, 1 January 1989 (1989-01-01), pages 264-272, XP008147525, ISSN: 0022-1279
- DANIEL W. GRISLEY ET AL: "Alkoxymethylphosphonic and alkoxymethylphosphonothioic derivatives", JOURNAL OF CHEMICAL & ENGINEERING DATA, vol. 19, no. 2, 1 April 1974 (1974-04-01), pages 175-179, XP055016549, ISSN: 0021-9568, DOI: 10.1021/je60061a015
- KOZHUSHKO B ET AL: "ALKYL (ALKOXYALKYL)PHOSPHONOHA LIDATES", JOURNAL OF GENERAL CHEMISTRY USSR, CONSULTANTS BUREAU, NEW YORK, NY, US, vol. 50, no. 6, 1 January 1980 (1980-01-01), pages 1029-1041, XP008147508, ISSN: 0022-1279
- PETROV K ET AL: "ALKOXYMETHYLATION OF PHOSPHORUS TRICHLORIDE AND ALKYL PHOSPHORODICHLORIDITES WITH DIALKOXYMETHANES (ALKOXYMETHYL)PHOSPHONIC DICHLORIDES, ANHYDRIDES, AND ACID ESTERS", JOURNAL OF GENERAL CHEMISTRY USSR, CONSULTANTS BUREAU, NEW YORK, NY, US, vol. 50, no. 4, 1 January 1980 (1980-01-01), pages 628-633, XP008147510, ISSN: 0022-1279

## Description

The present invention is directed to a method for the manufacture of compounds containing an α-oxy phosphorus group selected from the formulae:

R³[-O-C(R¹)(R²)ₘ(P(O)R^{a}R^{b})₂₋ₘ]n -III-

R³[-C(OR¹) (R²)ₘ(P(O)R^{a}R^{b})₂₋ₘ]ₙ -IV-

is obtained by reacting a compound containing an α-oxy-carboxylic acid group having a formula selected from:

R³[-O-C(R¹) (R²)ₘ(COOM')₂₋ₘ]ₙ -V-5.8

R³[-C(OR¹) (R²)ₘ(COOM')₂₋ₘ]ₙ -VI-

wherein R^{a} and R^{b} are independently selected from: Cl; Br; a C₁₋₂₀ hydrocarbon group in branched, linear, cyclic, aromatic, heterocyclic or heteroaromatic configuration; a silyl group independently substituted by C₁₋₂₀ hydrocarbon groups in branched, linear, cyclic, aromatic, heterocyclic or heteroaromatic configuration; OR" or N(R'")₂, wherein R" can be selected from a C₁₋₂₀ hydrocarbon group in branched, linear, cyclic, aromatic, heterocyclic or heteroaromatic configuration, or a silyl group independently substituted by C₁₋₂₀ hydrocarbon groups in branched, linear, cyclic, aromatic, heterocyclic or heteroaromatic configuration, wherein R"' can be independently selected from H, a C₁₋₂₀ hydrocarbon group in branched, linear, cyclic, aromatic, heterocyclic or heteroaromatic configuration, or a silyl group independently substituted by C₁₋₂₀ hydrocarbon groups in branched, linear, cyclic, aromatic, heterocyclic or heteroaromatic configuration; if R^{a} or R^{b} is a N(R''')₂ group, then the two R''' groups of the N(R"')₂ group can be connected together with one R''' group being a C₂₋₂₀ hydrocarbon group in branched, linear, cyclic, aromatic, heterocyclic or heteroaromatic configuration and the other R''' being a direct bond; R^{a} and R^{b} can be connected, then R^{a} is a C₂₋₂₀ hydrocarbon group in branched, linear, cyclic, aromatic, heterocyclic or heteroaromatic configuration and R^{b} is a direct bond; if R^{a} and R^{b} are OR'' groups, then R'' of the first OR'' group can be a C₁₋₂₀ hydrocarbon group in branched, linear, cyclic, aromatic, heterocyclic or heteroaromatic configuration and the R'' of the second OR'' group a direct bond; if R^{a} and R^{b} are N(R''')₂ groups, then one R''' group of the first N(R''')₂ group can be a C₁₋₂₀ hydrocarbon group in branched, linear, cyclic, aromatic, heterocyclic or heteroaromatic configuration and one R''' of the second N(R''')₂ group is a direct bond to this R''' group of the first N(R''')₂ group; wherein R^{b} can be E with E being a C₁₋₂₀ hydrocarbon group in branched, linear, cyclic, aromatic, heterocyclic or heteroaromatic configuration; m can be 0 or 1; n is a selected integer from 1 to 100000; M' is represented by H or alkaline, earth alkaline, ammonium or protonated amine species;
R¹ and R² are independently selected from: H, hydrocarbon groups in branched, linear, cyclic, aromatic, heterocyclic or heteroaromatic configuration having from 1 to 100 carbon atoms; when R¹ in formulae -IV- and -VI- contains an aromatic or heteroaromatic group, then there must be at least two alkylene carbon atoms between the aromatic or heteroaromatic group and the oxygen atom;
R³ is selected from hydrocarbon groups in branched, linear, cyclic or heterocyclic configuration having from 1 to 200000 carbon atoms, whereby [-O-C(R¹)R(²)ₘ(COOM')₂₋ₘ] in formula -V- and [-C(OR¹)(R²)ₘ(COOM')₂₋ₘ] in formula -VI- can be distributed on the carbon chain of R³ by mono or di substitution on the individual R³ carbon atoms, evenly, randomly or in an alternating fashion or combinations thereof with the proviso that n is an integer which is equal to or smaller than 2 times the number of carbon atoms in R³;
when n = 1, R³ can be H or Y-B[-O-A]ₓ- wherein x is 0-50; wherein A is selected from linear and branched hydrocarbons having from 2 to 100 carbon atoms and B is selected from hydrocarbon groups in branched, linear, cyclic, heterocyclic, aromatic or heteroaromatic configuration having from 1 to 100 carbon atoms; Y is selected from hydrocarbon groups in branched, linear, cyclic, heterocyclic, aromatic or heteroaromatic configuration having from 1 to 100 carbon atoms; when Y is an aromatic or heteroaromatic group and x is 0, then B must comprise at least 2 alkylene carbon atoms between the heteroaromatic or aromatic group and the directly connected oxygen atom; wherein Y can represent: H, an unsubstituted or substituted double bond, an unsubstituted or substituted triple bond, - COZ, -O-COZ, -OR, -NR₂, -SiR'₃, -Si(OR')₃, -B(OR')₂, -P⁺R'₃, -N⁺R₃, -CN, halogen, -P(O)_{z}Z₂ -NR-COZ, -N(COR')₂, -NR-CSZ, - NR-C(NR)NR₂, -CSZ, -O-CSZ, -NR-SO₂R', -SO_{y}Z, -O-SO_{y}Z; wherein z is 0 or 1; wherein y is 0, 1 or 2; wherein Z is H, R, -OR, -NH₂, -NR₂, and -NHR wherein R is independently selected from H, hydrocarbon groups in branched, linear, cyclic, heterocyclic, aromatic or heteroaromatic configuration having from 1 to 100 carbon atoms; R' is independently selected from hydrocarbon groups in branched, linear, cyclic, heterocyclic, aromatic or heteroaromatic configuration having from 1 to 100 carbon atoms; if at least two R or R' groups are present in the functional group, then these groups can be connected, whereby one R or R' group is a direct bond and the other is a hydrocarbon group in branched, linear, cyclic, heterocyclic, aromatic or heteroaromatic configuration having from 1 to 100 carbon atoms, if R and R' are connected to different atoms, or 2 to 100 carbon atoms, if R and R' are connected to the same atom; B can also be a direct bond when Y is H or a hydrocarbon group in branched, linear, cyclic, heterocyclic, aromatic or heteroaromatic configuration having from 1 to 100 carbon atoms;
when n is 1, R³ can be connected to R¹ and be a direct bond, while R¹ is C₁₋₁₀ alkylene group in linear configuration;
when m is 1, R¹ and R² can also be connected, with R² being a direct bond and R¹ being a C₂₋₁₂ linear alkylene group;
and a P-X component having at least one P-X bond, whereby the phosphorus atom of the P-X bond has the +3 oxidation state with X being Cl or Br, by adding the P-X component to the compound containing an α-oxy carboxylic acid group, or the reverse, in an equivalent ratio of α-oxy carboxylic acid functions in the compound containing an α-oxy carboxylic acid group : P-X bonds in the P-X component of from 1 : 3 to 3 : 1, optionally followed by adding a quenching agent after completing the reaction of the P-X component with the compound containing an α-oxy carboxylic acid group or the reverse by adding the primary reaction product of the reaction of the P-X component with the compound containing an α-oxy carboxylic acid group to the quenching agent, and recovering the product formed.

Further described is a method for the manufacture of compounds containing an α-oxy phosphorus group, having the formula:

-O¹-C¹-P¹(O)< -I-

by reacting a P-X component having at least one P-X bond, whereby the phosphorus atom of the P-X bond has the +3 oxidation state with X being Cl or Br, by adding the P-X component to a compound containing an α-oxy carboxylic acid group in an equivalent ratio of α-oxy carboxylic acid functions in the compound containing an α-oxy carboxylic acid group : P-X bonds in the P-X component of from 1 : 3 to 3 : 1 (normal mode) or the reverse by adding the compound containing an α-oxy carboxylic acid group to the P-X component (reverse mode). In both modes of addition, normal and reverse, selected levels of a quenching agent can be added at the end of the reaction and the compound containing an α-oxy phosphorus group formed is recovered. The reaction releases carbon monoxide as a result of the conversion of the α-oxy carboxylic acid function.
The prior art is silent and non-suggestive concerning the synthesis of compounds containing an α-oxy phosphorus group starting from compounds containing an α-oxy carboxylic acid group. The direct conversion of an α-oxy carboxylic acid with PCl₃ to the corresponding α-oxy phosphonic acid dichloride by transformation of the carboxylic acid function into a phosphonic acid dichloride group with loss of CO has not been reported. α-Oxy phosphonic acid dichlorides are obtained by several different approaches starting from α-oxy phosphonic derivatives that need to be synthesized first. Reported are conversions starting from α-oxy phosphonic esters by deprotection of the ester function and subsequent reaction with oxalyl chloride [A.N. Reznov et al., Russ. J. Gen. Chem. 2009, 79, 1755-1757], from α-oxy phosphonic ester amides by reaction with oxalyl chloride [P. Lu et al., Bioorg. & Med. Chem, 2009. 19, 6918-6921] or SOCl₂ [S.F. Lee, C.A. Henrick, US4456464, 1984], or from α-oxy phosphonic acids by reaction with oxalyl chloride [Y. Yang et al., WO2007101371] or PCl₅ [Yu. G. Shermolovich et al., Zh. Obshch. Khim. 1989, 59, 2128-2129]. An approach leading directly to α-oxy phosphorus acid dichloride is represented by the alkoxymethylation of PCl₃ starting from dialkylformals [K. A. Petrov et al., Zh. Obshch. Khim. 1980, 50, 789-94; V.A. Shokol et al., Zh. Obshch. Khim. 1979, 49, 1474-1979]. Likewise, alkoxymethylation reactions with dialkylformals or orthoformates are known for other phosphorus containing starting materials like chloro diphenylphosphine [D.N. Deaton, e-EROS, 2001, entry on chloro diphenylphosphine; H. Monenschein et al., Chem. Eur. J. 1999, 5, 2270-2280], dichloro phenylphosphine [K.A. Petrov et al., Zh. Obshch. Khim. 190, 50, 1510-1515], alkyl dichloro phosphines [G.P. Luke, W.C. Shakespeare, Syn. Comm. 2002, 32, 2951-2957; H.J. Kleiner, DE19708722, 1998], or chloro dialkyl phosphites [0. Pav et al., Org. Lett. 2007, 9, 5469-5472; M. Chakravarty et al., Synthesis 2003, 2368-2372]. A further approach involves the FeCl₃ catalysed reaction of α-halo ethers with alkyl dichloro phosphites [Yu. A. Paliichuk et al., Zh. Obshch. Khim. 1989, 57, 307-316; B.N. Koshushko et al., Zh. Obshch. Khim. 1989, 50, 998-1006]. In a metathesis reaction of alkyl or aryl chloro phosphines with acetic anhydride the chloride substituent is selectively replaced by an acetate group with liberation of acetyl chloride. Such acetate functionalized phosphines react with α-chloro-ethers to form α-oxy phosphonic acid derivatives [M.B. Gazizov et al., Russ. J. Gen. Chem. 1978, 48, 1802-1806].

It is a major objective of this invention to provide a one-step method starting from the corresponding compounds containing an α-oxy carboxylic acid group and a P-X component for the manufacture of compounds containing an α-oxy phosphorus group possibly containing reactive P-Cl or P-Br bonds capable of a further derivatisation with a quenching agent to give a broad variety of functionalised compounds containing an α-oxy phosphorus group. It is another objective of this invention to provide a method for the manufacture of compounds containing an α-oxy phosphorus group with high yields of the compound containing an α-oxy phosphorus group. Yet another objective of the invention aims at selecting reagents which can be used to yield compounds containing an α-oxy phosphorus group in high yield and purity. Still another objective of the invention contemplates the manufacture of compounds containing an α-oxy phosphorus group in a one step procedure with high purity and selectivity. Still another aim of the invention resides in defining a method arrangement capable of yielding specific compounds containing an α-oxy phosphorus group under virtual exclusion of LOOPS to thus ensure a safe operation capable of producing high yields. Still another objective of the invention pertains to generating compounds containing an a-oxy phosphorus group with a large variety of substituents on the α-oxy fragment. It is another desirable objective of the invention to provide a method for producing compounds with low levels of byproduct formation except for the formation of hydrogen chloride or hydrogen bromide and carbon monoxide, which can be recovered conveniently and used.

The term "percent" or "%" as used throughout this application stands, unless defined otherwise, for "percent by weight" or "% by weight". The terms "phosphonic acid" and "phosphonate" are also used interchangeably depending, of course, upon medium prevailing alkalinity/acidity conditions. The term "ppm" stands for "parts per million". Unless defined otherwise, pH values are measured at 25°C on the reaction medium as such. The term "ambient" with respect to temperature and pressure means terrestrial conditions usually prevailing at sea level, i.e. temperature is between 18°C-25°C and pressure stands for 101325 Pa (ca. 760 mm Hg). The term "adjuvant" defines classes of compounds which can be present during the reaction to provide benefits while being unaffected as a result of the reaction. The term "LOOPS" means "low oxides of phosphorus". Reported yields have been determined by ³¹P-NMR spectroscopy. The chemical structure of all compounds has been established by combined ³¹P- and ¹H-NMR spectroscopic studies. The term "substituted by a C-atom" preferably means substituted by a C₁-C₂₀-hydrocarbon group, bonded through carbon, which can include heteroatoms, preferably a linear or branched, saturated or unsaturated alkyl chain, a saturated or partially unsaturated carbocyclic or heterocyclic group, an aromatic group or a heteroaromatic group.

The term "hydrocarbon group in branched, linear, cyclic or aromatic, heterocyclic or heteroaromatic configuration" preferably means that the hydrocarbon group can contain heteroatoms and is a linear or branched chain, a carbocyclic or heterocyclic group or an aromatic or heteroaromatic group.

The term "cyclic" embraces cyclic, alkylcyclic, alkylenecyclic, alkylalkylenecyclic and cyclic e.g. methylene cyclopentyl or methylcyclopentyl or methylmethylenecyclopentyl or cyclopentyl. The term "aromatic" embraces aromatic, alkylaromatic, alkylenearomatic and alkylalkylenearomatic. The terms "cyclic" or "aromatic" imply with respect to "cyclic" a structure of minimum 3 carbon atoms, with respect to "aromatic" a structure of at least 6 carbon atoms. The terms "heterocyclic" and "heteroaromatic" imply the formal replacement of 1, 2 or 3 carbon atoms in a "cyclic" or "aromatic" structure by a heteroatom of e.g. N, 0 or S or combinations thereof. The term "heteroaromatic" can also be represented by 5 membered rings, wherein at least one carbon atom is replaced by N, 0 or S. The term "quenching agent" embraces specific classes of nucleophilic reagents being capable of replacing the Cl atom or Br atom in a P-Cl or P-Br bond. The term "base" embraces tertiary amines and N-heteroaromatic compounds containing no N-H bonds. The term "compound containing an α-oxy carboxylic acid group" means that the described compound can either be a molecular or a polymeric structure wherein one or more α-oxy carboxylic acid groups are present. Consequently, the term "compound containing an α-oxy phosphorus group" means that the described compound can either be a molecular or a polymeric structure wherein one or more α-oxy phosphorus groups are present. This procedure provides a method for the conversion of at least one α-oxy carboxylic acid function of a compound containing an α-oxy carboxylic acid group into an α-oxy phosphorus group.

The foregoing and other objectives can now be met by reacting a compound containing an α-oxy carboxylic acid group with a P-X component containing at least one P-X bond, whereby the phosphorus atom has the +3 oxidation state with X being Cl or Br. The α-oxy carboxylic acid function in the compound containing an α-oxy carboxylic acid group can be represented by the free acid or by partially or fully neutralized species thereof. Suitable counter ions for the neutralized α-oxy carboxylic acid are alkaline, earth alkaline, ammonium and protonated amine species.

Described herein is a method for the manufacture of compounds containing an α-oxy phosphorus group having the formula:

-O¹-C¹-P¹(O)< -I-

comprising the steps of:
reacting a compound containing an α-oxy-carboxylic acid group having the formula:

   -O¹-C¹-COOM' - II-

   wherein the oxygen atom O¹ carries two substituents whereby the first substituent is C¹ and the second can be selected from a H atom or a C atom carrying three further substituents; wherein the carbon atom C¹ carries four substituents whereby the first substituent is O¹, the second is the P¹(O)< group in formula -I- or the COOM' group in formula -II- and the third and fourth can be independently selected from a H atom or a C atom; wherein the phosphorus atom P¹ carries four substituents whereby the first substituent is C¹, the second is the 0 atom and the third and fourth can be independently selected from Cl; Br; a C or a Si group; an 0 group carrying one further substituent selected from a H or a C or a Si group; a S group carrying one further substituent selected from a H or a C atom; or a N group carrying two further substituents independently selected from a H or C or Si group; wherein M' is represented by H or alkaline, earth alkaline, ammonium or protonated amine species;
   and a P-X component having at least one P-X bond, whereby the phosphorus atom of the P-X bond has the +3 oxidation state with X being Cl or Br, by adding the P-X component to the compound containing an α-oxy carboxylic acid group, or the reverse, in an equivalent ratio of α-oxy carboxylic acid functions in the compound containing an α-oxy carboxylic acid group : P-X bonds in the P-X component of from 1 : 3 to 3 : 1 at a temperature of from 10 °C to 200 °C for a total reaction time of from 1 minute to 7 days, optionally followed by adding a quenching agent after completing the reaction of the P-X component with the compound containing an α-oxy carboxylic acid group or by adding the primary reaction product of the reaction of the P-X component with the compound containing an α-oxy carboxylic acid group to the quenching agent, and recovering the product formed.

In one embodiment the oxygen atom O¹ in formula -II- carries two substituents whereby the first substituent is C¹ and the second can be selected from a H atom or a C atom carrying three further substituents; wherein the carbon atom C¹ carries four substituents whereby the first substituent is O¹, the second is the P¹(O)< group in formula -I- or the COOM' group in formula -II- and the third and fourth can be independently selected from a H atom or a C atom; wherein the phosphorus atom P¹ carries four substituents whereby the first substituent is C¹, the second is the 0 atom and the third and fourth can be independently selected from Cl; Br; a C or a Si group; an 0 group carrying one further substituent selected from a C or a Si group; or a N group carrying two further substituents independently selected from a H or C or Si group; wherein M' is represented by H or alkaline, earth alkaline, ammonium or protonated amine species.

In more detail, this invention concerns a method for the manufacture of compounds containing an α-oxy phosphorus group selected from the formulae:

R³[-O-C(R¹)(R²)ₘ(P(O)R^{a}R^{b})₂₋ₘ]ₙ -III-

R³[-C(OR¹) (R²)ₘ(P(O)R^{a}R^{b})₂₋ₘ]ₙ -IV-

comprising the steps of:
reacting a compound containing an α-oxy-carboxylic acid group having a formula selected from:

   R³[-O-C(R¹)(R²)ₘ(COOM')₂₋ₘ]ₙ -V-

   R³[-C(OR¹)(R²)ₘ(COOM')₂₋ₘ]ₙ -VI-

   and a P-X component having at least one P-X bond, whereby the phosphorus atom of the P-X bond has the +3 oxidation state with X being Cl or Br, by adding the P-X component to the compound containing an α-oxy carboxylic acid group, or the reverse, in an equivalent ratio of α-oxy carboxylic acid functions in the compound containing an α-oxy carboxylic acid group : P-X bonds in the P-X component of from 1 : 3 to 3 : 1 at a temperature of from 10 °C to 200 °C for a total reaction time of from 1 minute to 7 days;
   wherein the R^{a} and R^{b} groups are defined below, if these groups are introduced by the P-X component (see P-X component section), or R^{b} can be a C₁-C₂₀ hydrocarbon group in linear or branched chain, cyclic, aromatic, heterocyclic or heteroaromatic configuration; m can be 0 or 1; n is a selected integer from 1 to 100000;
   R¹ and R² are independently selected from: H, hydrocarbon groups in branched, linear, cyclic, aromatic, heterocyclic or heteroaromatic configuration having from 1 to 100 carbon atoms; when R¹ in formulae -IV- and -VI- contains an aromatic or heteroaromatic group, then there must be at least two alkylene carbon atoms between the aromatic or heteroaromatic group and the oxygen atom;
   R³ is selected from hydrocarbon groups in branched, linear, cyclic or heterocyclic configuration having from 1 to 200000 carbon atoms, whereby [-O-C(R¹)(R²)ₘ(COOM')₂₋ₘ] in formula -V- and [-C(OR¹)(R²)ₘ(COOM')₂₋ₘ] in formula -VI- can be distributed on the carbon chain of R³ by mono or di substitution on the individual R³ carbon atoms, evenly, randomly or in an alternating fashion or combinations thereof with the proviso that n is an integer which is equal to or smaller than 2 times the number of carbon atoms in R₃;
   when n = 1, R³ can be H or Y-B[-O-A]ₓ- wherein x is 0-50; wherein A is selected from linear and branched hydrocarbons having from 2 to 100 carbon atoms and B is selected from hydrocarbon groups in branched, linear, cyclic, heterocyclic, aromatic or heteroaromatic configuration having from 1 to 100 carbon atoms; Y is selected from hydrocarbon groups in branched, linear, cyclic, heterocyclic, aromatic or heteroaromatic configuration having from 1 to 100 carbon atoms; when Y is an aromatic or heteroaromatic group and x is 0, then B must comprise at least 2 alkylene carbon atoms between the heteroaromatic or aromatic group and the directly connected oxygen atom; wherein Y can represent: H, an unsubstituted or substituted double bond, an unsubstituted or substituted triple bond, - COZ, -O-COZ, -OR, -NR₂, -SiR'₃, -Si(OR')₃, -B(OR')₂, - P⁺R'₃, -N⁺R₃, -CN, halogen, -P(O)_{z}Z₂, -NR-COZ, - N(COR')₂, -NR-CSZ, -NR-C(NR)NR₂, -CSZ, -O-CSZ, -NR-SO₂R', -SO_{y}Z, -O-SO_{y}Z; wherein z is 0 or 1; wherein y is 0, 1 or 2; wherein Z is H, R, -OR, -NH₂, -NR₂, and -NHR wherein R is independently selected from H, hydrocarbon groups in branched, linear, cyclic, heterocyclic, aromatic or heteroaromatic configuration having from 1 to 100 carbon atoms; R' is independently selected from hydrocarbon groups in branched, linear, cyclic, heterocyclic, aromatic or heteroaromatic configuration having from 1 to 100 carbon atoms; if at least two R or R' groups are present in the functional group, then these groups can be connected, whereby one R or R' group is a direct bond and the other is a hydrocarbon group in branched, linear, cyclic, heterocyclic, aromatic or heteroaromatic configuration having from 1 to 100 carbon atoms, if R and R' are connected to different atoms, or 2 to 100 carbon atoms, if R and R' are connected to the same atom; B can also be a direct bond when Y is H or a hydrocarbon group in branched, linear, cyclic, heterocyclic, aromatic or heteroaromatic configuration having from 1 to 100 carbon atoms;
   when n is 1, R³ can be connected to R¹ and be a direct bond, while R¹ is C₁₋₁₀ alkylene group in linear configuration; when m is 1, R¹ and R² can also be connected, with R² being a direct bond and R¹ being a C₂₋₁₂ linear alkylene group;
   optionally followed by adding a quenching agent after completing the reaction of the P-X component with the compound containing an α-oxy carboxylic acid group or the reverse by adding the primary reaction product of the reaction of the P-X component with the compound containing an α-oxy carboxylic acid group to the quenching agent, and recovering the product formed.

Preferably n is a selected integer from 1 to 15000; preferably R¹ and R² are independently selected from: H, hydrocarbon groups in branched, linear, cyclic, aromatic, heterocyclic or heteroaromatic configuration having from 1 to 20 carbon atoms;
preferably R³ is selected from hydrocarbon groups in branched, linear, cyclic or heterocyclic configuration having from 1 to 30000 carbon atoms; when n = 1, R³ can be H or Y-B[-O-A]ₓ- wherein A is selected from linear and branched hydrocarbons having preferably from 2 to 10 carbon atoms and B is selected from hydrocarbon groups in branched, linear, cyclic, heterocyclic, aromatic or heteroaromatic configuration having from 1 to 50 carbon atoms; wherein Y can represent: H, an unsubstituted or substituted double bond, an unsubstituted or substituted triple bond, -COZ, -O-COZ, -OR, -NR₂, -SiR'₃,-Si (OR')₃, -B(OR')₂, -P⁺R'₃, -N⁺R₃, -CN, halogen, -P(O)_{z}Z₂, -NR-COZ, -N(COR')₂, -NR-CSZ, -NR-C(NR)NR₂, -CSZ, -O-CSZ,-SO_{y}Z, -O-SO_{y}Z, -NR-SO₂R'; wherein z is 0 or 1; wherein y is 0, 1 or 2; wherein Z is H, R, -OR, -NH₂, -NR₂, and -NHR wherein R is independently selected from H, hydrocarbon groups in branched, linear, cyclic, heterocyclic, aromatic or heteroaromatic configuration having from 1 to 20 carbon atoms; R' is independently selected from hydrocarbon groups in branched, linear, cyclic, heterocyclic, aromatic or heteroaromatic configuration having from 1 to 20 carbon atoms; if at least two R or R' groups are present in the functional group then these groups can be connected whereby one R or R' group is a direct bond and the other is a hydrocarbon group in branched, linear, cyclic, heterocyclic, aromatic or heteroaromatic configuration having from 1 to 20 carbon atoms, if R and R' are connected to different atoms, or 2 to 20 carbon atoms, if R and R' are connected to the same atom; wherein x is preferably 0-30.

More preferred n is a selected integer from 1 to 5000;
more preferred R¹ and R² are independently selected from: H, hydrocarbon groups in branched, linear, cyclic, aromatic, heterocyclic or heteroaromatic configuration having from 1 to 10 carbon atoms;
more preferred R³ is selected from hydrocarbon groups in branched, linear, cyclic or heterocyclic configuration having from 1 to 10000 carbon atoms;
when n = 1, R³ can be H or Y-B[-O-A]ₓ- wherein x is 0-20; wherein A is selected from linear and branched hydrocarbons having more preferred from 2 to 6 carbon atoms and B is selected from hydrocarbon groups in branched, linear, cyclic, heterocyclic, aromatic or heteroaromatic configuration having from 1 to 50 carbon atoms; Y is selected from hydrocarbon groups in branched, linear, cyclic, heterocyclic, aromatic or heteroaromatic configuration having from 1 to 50 carbon atoms; wherein Y can represent: H, an unsubstituted or substituted double bond, an unsubstituted or substituted triple bond,-COZ, -OR, -NR₂, -CN, -Cl, -Br, -I, -O-SO_{y}Z, -N(COR')₂; wherein y is 0, 1 or 2; wherein Z is H, R, -OR, -NH₂, -NR₂, and -NHR wherein R is independently selected from H, hydrocarbon groups in branched, linear, cyclic, heterocyclic, aromatic or heteroaromatic configuration having from 1 to 10 carbon atoms; R' is independently selected from hydrocarbon groups in branched, linear, cyclic, heterocyclic, aromatic or heteroaromatic configuration having from 1 to 10 carbon atoms; if at least two R or R' groups are present in the functional group then these can be connected whereby one R or R' group is a direct bond and the other is a hydrocarbon group in branched, linear, cyclic, heterocyclic, aromatic or heteroaromatic configuration having from 1 to 10 carbon atoms, if R and R' are connected to different atoms, or 2 to 10 carbon atoms, if R and R' are connected to the same atom; B can also be a direct bond when Y is H or a hydrocarbon group in branched, linear, cyclic, heterocyclic, aromatic or heteroaromatic configuration having from 1 to 50 carbon atoms;
when n is 1, R³ can be connected to R¹ and be a direct bond, while R¹ is C₁₋₈ alkylene group in linear configuration; when m is 1, R¹ and R² can also be connected, with R² being a direct bond and R¹ being a C₂₋₈ linear alkylene group.

Most preferred compounds containing an α-oxy carboxylic acid group herein are:
glycolic acid;
diglycolic acid;
methoxyacetic acid;
3,6,9-trioxadecanoic acid;
5-chloro-3-oxapentanoic acid;
5-amino-3-oxapentanoic acid;
2-tetrahydrofuroic acid;
2-methoxy-butane-1,4-dioic acid.

The P-X component is comprised of species containing at least one P-X bond, whereby the phosphorus atom has the +3 oxidation state with X being Cl or Br. Suitable P-X components can be selected from:

R^{a}R^{b}PX or R^{a}(X)P-E-P(X)R^{a}

wherein X is selected from Cl or Br; R^{a} and R^{b} are independently selected from: Cl; Br; a C₁₋₂₀ hydrocarbon group in branched, linear, cyclic, aromatic, heterocyclic or heteroaromatic configuration; a silyl group independently substituted by C₁₋₂₀ hydrocarbon groups in branched, linear, cyclic, aromatic, heterocyclic or heteroaromatic configuration; OR" or N(R''')₂, wherein R" can be selected from a C₁₋₂₀ hydrocarbon group in branched, linear, cyclic, aromatic, heterocyclic or heteroaromatic configuration, or a silyl group independently substituted by C₁₋₂₀ hydrocarbon groups in branched, linear, cyclic, aromatic, heterocyclic or heteroaromatic configuration, wherein R''' can be independently selected from H, a C₁₋₂₀ hydrocarbon group in branched, linear, cyclic, aromatic, heterocyclic or heteroaromatic configuration, or a silyl group independently substituted by C₁₋₂₀ hydrocarbon groups in branched, linear, cyclic, aromatic, heterocyclic or heteroaromatic configuration; if R^{a} or R^{b} is a N(R''')₂ group, then the two R''' groups of the N(R''')₂ group can be connected together with one R''' group being a C₂₋₂₀ hydrocarbon group in branched, linear, cyclic, aromatic, heterocyclic or heteroaromatic configuration and the other R''' being a direct bond; R^{a} and R^{b} can be connected, then R^{a} is a C₂₋₂₀ hydrocarbon group in branched, linear, cyclic, aromatic, heterocyclic or heteroaromatic configuration and R^{b} is a direct bond; if R^{a} and R^{b} are OR'' groups, then R'' of the first OR" group can be a C₁₋₂₀ hydrocarbon group in branched, linear, cyclic, aromatic, heterocyclic or heteroaromatic configuration and the R'' of the second OR'' group a direct bond; if R^{a} and R^{b} are N(R''')₂ groups, then one R''' group of the first N(R''')₂ group can be a C₁₋₂₀ hydrocarbon chain in branched, linear, cyclic, aromatic, heterocyclic or heteroaromatic configuration and one R''' of the second N(R''')₂ group is a direct bond to this R''' group of the first N(R''')₂ group; E can be a C₁₋₂₀ hydrocarbon group in branched or linear chain, cyclic, aromatic, heterocyclic or heteroaromatic configuration.

More preferred P-X components are PCl₃, PBr₃, Cl₂PCH₂CH₂PCl₂ and R^{a}R^{b}PCl, wherein R^{a} and R^{b} are independently selected from: a C₁₋₁₀ hydrocarbon group in branched, linear, cyclic, aromatic, heterocyclic or heteroaromatic configuration; or OR", wherein R" can be selected from a C₁₋₁₀ hydrocarbon group in branched, linear, cyclic, aromatic, heterocyclic or heteroaromatic configuration; R^{a} and R^{b} can be connected, then R^{a} is a C₂₋₁₀ hydrocarbon group in branched, linear, cyclic, aromatic, heterocyclic or heteroaromatic configuration and R^{b} is a direct bond; if R^{a} and R^{b} are OR" groups, then R" of the first OR" group can be a C₁₋₁₀ hydrocarbon group in branched, linear, cyclic, aromatic, heterocyclic or heteroaromatic configuration and the R'' of the second OR'' group a direct bond.

The most preferred PX component is PCl₃.

Additives of formula MW, MW₂ or MW₃ can be added to convert the P-X bond into an intermediate P-W bond with an increased reactivity compared to the originally P-X bond. M is selected from main-group metals; transition metals; a silyl group independently substituted by C₁₋₂₀ hydrocarbon groups in branched, linear, cyclic, aromatic, heterocyclic or heteroaromatic configuration; or a stannyl group independently substituted by C₁₋₂₀ hydrocarbon groups in branched, linear, cyclic, aromatic, heterocyclic or heteroaromatic configuration. W is a good leaving group and can be selected from anions like Br, I, OTf, NTf₂, F₃CCO₂, etc. wherein Tf stands for trifluoromethanesulfonyl. Examples of suitable additives are LiI, NaI, MgI₂, AgOTf, TmsOTf, TlOTf or F₃CCO₂Ag wherein Tms stands for trimethylsilyl. The additive is generally added in an equivalent ratio of additive : P-X bonds in the P-X component of from 0.001 : 1 to 1 : 1.

If the third and/or the fourth substituent of P¹ in formula -I- or R^{a} and/or R^{b} in formulae -III- or -IV- are Cl or Br, then a quenching agent can be utilised to substitute the remaining, substantially unreacted P-Cl or P-Br bonds in the primary reaction product, obtained from the reaction of the compound containing an α-oxy carboxylic acid group with the P-X component, by another group, preferably an organic fragment. Suitable quenching agents can be selected from a fairly large variety of species e.g. as follows:
- alcohols, water or derivatives thereof like H₂O, M¹(OH)ₘ₁, R^{c}-OH, (Rc-O)ₘ₁M², R^{c}[-O-Z₁]ₘ₃-OH, (R^{c}[-O-Z₁]ₘ₃-O)ₘ₁M²;
- thiols, hydrogen sulfide or derivatives thereof like H₂S, R^{c}-SH, (R^{c}-S)ₘ₁M²;
- amines, ammonia or derivatives thereof such as NH₃, M²(NH₂)ₘ₁, R^{c}NH₂, R^{c}R^{d}NH, (R^{c}NH)ₘ₁M², (R^{c}R^{d}N)ₘ₁M², R^{c}[-O-Z₁]ₘ₃-NH₂, (R^{c} [-O-Z₁]ₘ₃-NH)ₘ₁M², R^{c}-O-Z₁]ₘ₃-NH-[Z₂-O-]ₘ₄-R^{d}, (R^{c}[-O-Z₁]ₘ₃-N-[Z₂-O-]ₘ₄-R^{d})ₘ₁M²;
- carboxylic acid amides or derivatives thereof such as H₂N-C(O)R^{c}, R^{c}NH-C(O)R^{d}, M²(N(H)-C(O)R^{c})ₘ₁, M²(N(R^{c})-C(O)R^{d})ₘ₁;
- carboxylic acids or derivatives thereof such as R^{c}CO₂H, (R^{c}CO₂)ₘ₁M¹;
- thiocarboxylic acids or derivatives thereof such as R^{c}COSH, (R^{c}COS)ₘ₁M¹;
- dithiocarboxylic acids or derivatives thereof such as R^{c}CS₂H, (R^{c}CS₂)ₘ₁M¹;
- organometallic reagents like R^{e}Li, R^{e}MgX', R^{e}₂Mg, R^{e}ZnX', R^{e}₂Zn, R^{e}Cu and combinations of R^{e}Cu and an additive like LiCl, LiCN, MgCl₂, ZnCl₂, etc.;
- difunctional compounds containing functional groups selected from OH, NH₂, NHR, COOH or SH separated by a spacer like:
   o HO-Y'-OH or H[-O-Z₁]ₘ₃-OH like e.g. ethylene glycol, 1,3-propanediol, 1,2-dihydroxybenzene, poly(ethylene glycol);
   o H₂N-Y'-NH₂, R^{c}HN-Y'-NH₂, R^{c}HN-Y'-NHR^{d}, H₂N-Z₁[-O-Z₂]ₘ₃-NH₂ like e.g. ethylenediamine, 1,2-diaminobenzene, Jeffamines D-230, D-400, D-2000, D-4000, HK-511, ED-600, ED-900, ED-2003, EDR-148, EDR-176 (Jeffamine is a trademark from Huntsman Corporation);
   o H₂N-Y'-OH, R^{c}HN-Y'-OH like e.g. ethanolamine;
   o H₂N-Y'-CO₂H, R^{c}HN-Y'-CO₂H like e.g. glycine;
   o HO-Y'-CO₂H like e.g. glycolic acid;
   o HS-Y'-CO₂H like e.g. thioglycolic acid;
   o HS-Y'-SH like e.g. 1,2-ethanedithiol, 1,3-propanedithiol;
- polyfunctional compounds with a single functional group or different functional groups selected from OH, NH₂, NHR, COOH or SH like:
   o polyols like e.g. pentaerythritol, cellulose, starch, fructan, galactomannan, agar, arabinogalacton;
   o monomeric or polymeric aminosugars like e.g. glucosamine, galactosamine, chitosan, chitin;
   o polymers with hydroxyl functions like e.g. poly(vinyl alcohol) or partially hydrolysed poly(vinyl acetate) with a M_{w} ranging between 5000 to 250000;
   o polymers with amine functions like e.g. poly(vinyl amine) or partially hydrolysed poly(vinyl acetamide) with a M_{w} ranging between 1000 to 100000, poly(allylamine) with a M_{w} ranging between 1000 to 100000, linear or branched poly(ethyleneimine) with a M_{w} ranging between 1000 to 100000;
   wherein M¹ can be alkaline, earth alkaline or Zn; wherein M² can be Li, Na, K, Mg, Zn; wherein X' can be Cl, Br, I;
   wherein m1 is 1 or 2, depending on the valency of the metal, for monocations m1 is 1 and for dications m1 is 2; wherein m3 and m4 can be independently selected from 1 to 100;
   wherein R^{c} and R^{d} can be selected from a C₁₋₂₀ hydrocarbon chain in branched, linear, cyclic, aromatic, heterocyclic or heteroaromatic configuration, or a silyl group independently substituted by C₁₋₂₀ hydrocarbon groups in branched, linear, cyclic, aromatic, heterocyclic or heteroaromatic configuration, a mono- or polyhalogen substituted (F, Cl, Br, I, or a mixture thereof) C₁₋₂₀ hydrocarbon chain in branched, linear, cyclic, aromatic, heterocyclic or heteroaromatic configuration; wherein R^{e} can be selected from a C₁₋₂₀ hydrocarbon chain in branched, linear, cyclic, aromatic, heterocyclic or heteroaromatic configuration, substituted vinyl groups, substituted allyl groups;
   wherein Y' can be selected from a C₁₋₂₀ hydrocarbon chain in branched, linear, cyclic, aromatic, heterocyclic or heteroaromatic configuration; wherein Z₁ and Z₂ can be independently selected from linear and branched hydrocarbons having from 2 to 20 carbon atoms.

Most preferred quenching agents can be selected from: water, lithium hydroxide, sodium hydroxide, potassium hydroxide, magnesium hydroxide, methanol, ethanol, n-propanol, iso-propanol, n-butanol, phenol, 2,2,2-trifluoroethanol, trimethylsilanol, allyl alcohol, sodium ethanolate, potassium tert. butanolate, ammonia, lithium amide, sodium amide, dimethylamine, diethylamine, di n-propylamine, aniline, n-propylamine, isopropylamine, n-butylamine, sec. butyl amine, tert. butylamine, benzylamine, morpholine, piperidine, acetic acid, benzoic acid, propanoic acid, n-butanoic acid, n-pentanoic acid, methyl lithium, tert. butyl lithium, phenyl lithium, ethylmagnesium chloride, ethylmagnesium bromide, phenylmagnesium chloride, phenylmagnesium bromide, vinylmagnesium chloride, vinylmagnesium bromide, allylmagnesium chloride, 1,2-dihydroxybenzene, ethylene glycol, 1,3-propanediol, 2,2-dimethyl-1,3-propanediol, pinacol, 2,3-butanediol, 1,2-diaminobenzene, N,N'-dimethylethylenediamine, ethanolamine, 2-(methylamino)ethanol, glycine, alanine, phenylalanine, arginine, citrulline, glutamic acid, histidine, isoleucine, leucine, valine, lysine, ornithine, tryptophane, tyrosine, threonine, proline, glycolic acid, salicylic acid, pentaerythritol, glucosamine, galactosamine, chitosan, chitin, poly(vinyl alcohol) with a M_{w} ranging between 5000 to 500000, partially hydrolysed poly(vinyl acetate) with a M_{w} ranging between 5000 to 500000, poly(vinyl amine) with a M_{w} ranging between 1000 to 250000, partially hydrolysed poly(vinyl acetamide) with a M_{w} ranging between 1000 to 250000, poly(allylamine) with a M_{w} ranging between 1000 to 250000, linear or branched poly(ethyleneimine) with a M_{w} ranging between 1000 to 250000, 1,2-ethanedithiol, 1,3-propanedithiol, Jeffamine M-600, Jeffamine M-1000, Jeffamine M-2005, Jeffamine M-2070, Jeffamine D-230, Jeffamine D-400, Jeffamine D-2000, Jeffamine D-4000, Jeffamine HK-511, Jeffamine ED-600, Jeffamine ED-900, Jeffamine ED-2003, Jeffamine EDR-148, Jeffamine EDR-176, cellulose, starch, fructan, galactomannan, agar, arabinogalacton.

The most preferred quenching agents are: water, n-propanol, 1,2-dihydroxybenzene, N,N'-dimethylethylenediamine.

The reaction of residual P-Cl or P-Br bonds of the primary reaction product, obtained from the reaction of the compound containing an α-oxy carboxylic acid group with the P-X component, with the quenching agent generally occurs by elimination of HCl or HBr if quenching agents with protic functions e.g. alcohols, amines, carboxylic acids, etc. are used or by salt elimination if deprotonated quenching agents e.g. alcoholates, amides, etc. or organometallic reagents are used. The residual P-Cl or P-Br bonds are replaced by new P-O, P-N, P-S or P-C bonds depending on the nature of the quenching agent. If one phosphorus atom carries two residual P-Cl or P-Br bonds and if as the quenching agent a difunctional or polyfunctional compound is used, then there are two possibilities how connections can be made. Firstly, the two P-Cl or P-Br bonds attached to the same phosphorus atom can be replaced by two functions incorporated in one difunctional or polyfunctional compound leading to a cyclic structure with the phosphorus atom in the cycle. Secondly, the two P-Cl or P-Br bonds attached to the same phosphorus atom can be replaced by two functions of two independent difunctional or polyfunctional compounds leading to polymeric structures, wherein the phosphorus atom is linking two difunctional or polyfunctional compounds. If a phosphorus atom carries only one P-Cl or P-Br bond, then the reaction with a difunctional or polyfunctional compound can result in the attachment of the α-oxy phosphorus group fragments to all available functions of the difunctional or polyfunctional compound depending on the stoichiometry. When carefully selected reaction conditions are applied, it is possible to substitute only one P-Cl or P-Br bond of a phosphorus atom carrying two residual P-Cl or P-Br bonds while retaining the second P-Cl or P-Br bond.

For the reaction of residual P-Cl or P-Br bonds of the primary reaction product, obtained from the reaction of the compound containing an α-oxy carboxylic acid group with the P-X component, with the quenching agent preferably the aid of a base is required in selected cases e.g. alcohols, thiols, amines, carboxylic acids, mono- and dithiocarboxylic acids, carboxylic acid amides, di- and polyfunctional compounds listed in the quenching agent section. Suitable bases are tertiary amines; N-heteroaromatic compounds; resin-bound tertiary and N-heteroaromatic compounds. Per equivalent of residual P-Cl or P-Br bond at least 1 equivalent of base is required. If an amine is used as the quenching agent, then instead of a base at least two equivalents of this amine can be used per residual P-Cl or P-Br bond. If a Broensted acid as an adjuvant (see below) is utilised for the conversion of the compound containing an α-oxy carboxylic acid group, which has not been separated from the reaction medium, then one additional equivalent of base per equivalent acid function in the Broensted acid is required. Likewise, one additional equivalent of organometallic reagent per equivalent acid function in the Broensted acid is required.

Preferred bases are triethylamine, pyridine, 4-(dimethylamino)pyridine, 2,6-lutidine, 2-picoline, 1,4-diazabicyclo[2.2.2]octane, 1,8-diazabicyclo[5.4.0]undec-7-ene, 1,8-diazabicyclo[5.4.0]undec-7-ene, poly(4-vinylpyridine), poly(2-vinylpyridine).

In some cases the aforementioned conversion of the compound containing an α-oxy carboxylic acid group does not lead to the expected corresponding compound containing an α-oxy phosphorus group, but to another compound containing an α-oxy phosphorus group specified by one of the formulae -I-, -III- and -IV-. In these cases, the compound containing an α-oxy carboxylic acid group contains a labile function or group that is cleaved under the applied reaction conditions. An example for such a conversion is the reaction of diglycolic acid specified by formula -III- with PCl₃ yielding after quenching with water besides the desired phosphonate also hydroxymethylphosphonic acid specified by formula -III- (see experimental section for further details). The quenching agent might react as well with functional groups if present in the used compound containing an α-oxy carboxylic acid group rather than with the unreacted P-X bonds. Especially reactive quenching reagents like organometallic reagents are prone to give such undesirable side reactions. For example, the addition of Grignard reagents like R^{e}MgX' to carbonyl functions or the deprotonation of acidic NH-functions of carboxylic acid amides with lithium organyls like R^{e}Li are reported in the art. [Ch. Elschenbroich, A. Salzer - Organometallics. A Concise Introduction, Wiley VCH, 2006] The presence of the released HCl in the reaction mixture can lead to degradation of the substrate if e.g. ether bonds are present. The reaction of 3,6,9-trioxadecanoic acid with PCl₃ with the adjuvant Amberlyst-15 gives after hydrolysis besides the desired product a mix of phosphonates arising from stepwise degradation of the ether bonds. Moreover, if the compound containing an α-oxy carboxylic acid group is incorporating reactive functions like e.g. -OH, -SH, -NH-or -COOH, these can react as well with remaining unreacted P-X bonds in the primary reaction product of the compound containing an α-oxy carboxylic acid group with the P-X component by elimination of HCl and formation of new P-O, P-S or P-N bonds.

In preferred aspects of the invention herein, the P-X component is added to a solution of the compound containing an α-oxy carboxylic acid group. The compound containing an α-oxy carboxylic acid group can also be added to the P-X component, i.e. a reverse addition, which is another preferred aspect of this invention. Whatever the order of addition is, an adjuvant and/or solvent can be added in combination with the P-X component or with the compound containing an α-oxy carboxylic acid group or both. The adjuvant/solvent can be added to the reaction mixture after addition of all the reagents or to the individual reaction partners before initiating the addition of the individual partners and any combination thereof.

The adjuvant is selected from the group of:
- Broensted acids;
- Lewis acids; and
- combinations thereof

While the adjuvants were found to beneficially mitigate/enhance the claimed method, in particular the one step formation of selected high purity compounds containing an α-oxy phosphorus group, the mechanism by virtue of which the adjuvants interfere is not well understood. In any event the essential parameters are required to generate the, by any standard, unusually beneficial results. Irrespective of the foregoing it was found that superior results can also be secured from using a mixture of the compound containing an α-oxy carboxylic acid group and the P-X component without the use of any adjuvant or solvent.

One adjuvant class are homogeneous or heterogeneous Broensted acids which can e.g. be sulfonic, carboxylic or inorganic acids. The sulfonic acid compound is selected from homogeneous and heterogeneous sulfonic and polysulfonic acids. Suitable homogeneous sulfonic acids have the formula:

(R*-(SO₃H)ₓ)

wherein R* can be selected from C₁₋₂₄ hydrocarbon groups of linear, branched, cyclic or polycyclic configuration, possibly substituted by F and/or CF₃ groups, where x is 1 to 4, or C₆₋₁₄ aromatic or alkyl aromatic groups wherein the alkyl group can be C₆₋₂₀ where x is 1 to 3 for monoaromatic systems and 1 to 4 for diaromatic and higher aromatic systems. R* can also be represented by diphenylether or diphenylmethane or by C₆₋₂₀ alkyl diphenylmethane or C₆₋₂₀ alkyl diphenylether with x equal to 1 to 2.

Preferred heterogeneous sulfonic acids can be represented by species of discretionary selected subclasses as follows:
(1) sulfonic acids grafted onto resins comprising copolymers of styrene, ethylvinyl benzene and divinyl benzene functionalized so as to graft SO₃H groups onto the aromatic groups can be used. These acidic resins can be used in different physical configurations such as in gel form, in a macro-reticulated configuration or supported onto a carrier material such as silica or carbon or carbon nanotubes. A known example of such resins is AMBERLYST 15 from Rohm and Haas. Other types of resins include perfluorinated resins carrying sulfonic acid groups. The fluorinated resins can be used as such or supported onto an inert material like silica or carbon or carbon nanotubes entrapped in a highly dispersed network of metal oxides and/or silica. NAFION is an example of such fluorinated resins. NAFION is a Trade Mark of the Du Pont Company. AMBERLYST 15 is a Trade Mark of the Rohm and Haas Company.
(2) sulfonic acids deposited on solids, having a lone pair of electrons, like silica, silica-alumina combinations, alumina, zeolites, silica, activated charcoal, sand and/or silica gel can be used as support for sulfonic acids, like methane sulfonic acid or para-toluene sulfonic acid. Solids, like zeolites, silica, or mesoporous silica e.g. MCM-41 or -48, or polymers like e.g. polysiloxanes can be functionalized by chemical grafting to thus yield sulfonic acid groups or precursors therefore. The functionalization can be introduced in various ways by direct grafting on the solid by e.g. reaction of the SiOH groups of the silica with chlorosulfonic acid; or can be attached to the solid by means of organic spacers which can be e.g. a perfluoro alkyl silane derivative. Sulfonic acid functionalized silica can also be prepared via a sol gel process, leading to e.g. a thiol functionalized silica, by co-condensation of Si(OR')₄ and e.g. 3-mercaptopropyl-tri-methoxy silane using either neutral or ionic templating methods with subsequent oxidation of the thiol to the corresponding sulfonic acid by e.g. H₂O₂. The functionalized solids can be used as is, i.e. in powder form, in the form of a zeolitic membrane, or in many other ways like in admixture with other polymers in membranes or in the form of solid extrudates or in a coating of e.g. a structural inorganic support e.g. monoliths of cordierite.

Homogeneous sulfonic acids are adapted to form a single liquid phase within the reaction medium under the reaction conditions. It is understood that the sulfonic acids which are insoluble in the reaction medium, and thus nonhomogeneous, at ambient conditions e.g. 20 °C, can become soluble at e.g. the reaction temperature and thus qualify as "homogeneous". The sulfonic acid may be recovered from the reaction medium by known techniques such as e.g. filtration of insoluble acids, or by other techniques routinely available such as ion exchange, nanofiltration or electrodialysis. The homogeneous nature of a sulfonic acid can be ascertained routinely by e.g. visible inspection of precipitation or phase separation properties.

The term heterogeneous means, that the sulfonic acid is substantially insoluble in the reaction medium at the reaction conditions. The insoluble nature of the acid can be ascertained routinely e.g. based on visible observation. The sulfonic acid is not, and cannot be equated to, a reactant in the context of the claimed technology. Actually, the sulfonic acid is, in fine, not chemically altered as a result of the claimed method although it may well be, probably is, that the sulfonic acid interferes in the formation of reaction intermediates.

Suitable homogeneous sulfonic acids can be solid at ambient temperature and shall preferably be used in combination with organic solvents which are inert in relation to the essential reaction partners. Suitable solvents are listed in the passage below.

Preferred homogeneous and heterogeneous sulfonic acids are:
methanesulfonic acid;
trifluoromethanesulfonic acid;
Resin carrying sulfonic acid groups e.g. Amberlyst 15; Nafion NR50; and
Nafion SAC-13.

The carboxylic acid compound is selected from homogeneous and heterogeneous carboxylic and polycarboxylic acids. Suitable homogeneous carboxylic acids have the formula:

(R**-(CO₂H)ₓ)

wherein R** can be selected from C₁₋₂₄ hydrocarbon groups of linear, branched, cyclic or polycyclic configuration, possibly substituted by F, Cl, Br, I and/or CF₃ groups, R** can be selected from perfluoro polyalkoxy hydrocarbon chain where x is 1 to 4, or C₆₋₁₄ aromatic or alkyl aromatic groups wherein the alkyl group can be C₆₋₂₀ where x is 1 to 3 for monoaromatic systems and 1 to 4 for diaromatic and higher systems. R** can also be represented by diphenylether or diphenylmethane or by C₆₋₂₀ alkyl diphenylmethane or C₆₋₂₀ alkyl diphenylether with x is 1 to 2.

Suitable homogeneous carboxylic acids can be solid at ambient temperature and shall, in preferred executions be used in combination with organic solvents which are inert in relation to the essential reaction partners. Suitable solvents are listed in the passage below. Preferred carboxylic acids are trifluoroacetic acid and perfluoroundecanoic acid.

The carboxylic acid is not, and cannot be equated to, a reactant in the context of the claimed technology. Actually, the carboxylic acid is, in fine, not chemically altered as a result of the claimed method although it may well be, probably is, that the carboxylic acid interferes in the formation of reaction intermediates.

The inorganic acid compound is selected from homogeneous and heterogeneous inorganic acids. Suitable homogeneous inorganic acids are selected from:
H₃PO₃, H₃PO₄, polyphosphoric acid, metaphosphoric acid, phosphonic acid derivatives R'P(O)(OH)₂.

Heterogeneous inorganic acids can be represented by acidic metal oxide combinations which can be supported onto usual carrier materials such as silica, carbon, silica-alumina combinations or alumina. These metal oxide combinations can be used as such or with inorganic or organic acid doping. Suitable examples of this class of adjuvants are amorphous silica-alumina, acid clays, such as smectites, inorganic or organic acid treated clays, pillared clays, zeolites, usually in their protic form, and metal oxides such as ZrO₂-TiO₂ in about 1 : 1 molar combination and sulphated metal oxides e.g. sulphated ZrO₂. Other suitable examples of metal oxide combinations, expressed in molar ratios, are TiO₂-SiO₂ 1 : 1 ratio; and ZrO₂-SiO₂ 1 : 1 ratio. A preferred inorganic acid is Montmorillonite K-10. Another class of suitable heterogeneous Broensted acids is represented by resin bound phosphonic acids e.g. aminomethylene-phosphonic acid attached by a variable link to macro porous polystyrene matrix e.g. QuadraPure™ AMPA from Reaxa, or inorganic bound phosphonic acids e.g. phosphonic acid attached by a variable link to an inorganic support like e.g. silica e.g. POH1 from PhosphonicS.

The number of equivalents of Broensted acid functions in the sulfonic, carboxylic and inorganic acids can be readily and routinely ascertained. As an example, the Broensted acidity can be determined by a simple acid base titration or by adding a known amount of a base and titration of the excess of the base, which has not been neutralized by the acid functions. For thermally stable heterogeneous sulfonic acids and heterogeneous inorganic acids the number of acid equivalents can be determined e.g. by thermal desorption of isopropylamine followed by using a micro-balance in accordance with the method of R.J. Gorte et al., J. Catal. , 129, 88, (1991) and 138, 714, (1992).

The Lewis acid is selected from homogeneous and heterogeneous Lewis acids. Suitable homogeneous Lewis acids can be selected from metal salts having the general formula:

MXₙ

wherein M represents a transition metal or main group element like Li, B, Mg, Al, Bi, Fe, Zn, or Pd; X in MXₙ is typically an anion of an acid or acid derivative like Cl, OTf or NTf₂, where Tf stands for CF₃SO₂-; and n is equal to the oxidation state of M, which can be from 1 to 5. Possible combinations are e.g. LiNTf₂; Mg(OTf)₂; MgCl₂; ZnCl₂; PdCl₂; Fe(OTf)₃; Al(OTf)₃; AlCl₃; Bi(OTf)₃; BiCl₃. Preferably, combinations of a hard metal or a metal on the borderline between hard and soft according to the HSAB (hard soft acid base) concept like Li, Mg, Al, Sc, Zn, Bi, and weakly coordinating anions like OTf or NTf₂ are used. Examples of such preferred combinations are: LiNTf₂; Mg(OTf)₂; Al(OTf)₃; Bi(OTf)₃.
The metal salt is typically dissolved in a donor solvent like acetonitrile or 1,2-dimethoxyethane to solvate the cation. Discrete complexes of such solvated metal cations like [Cu(CN)_{4]}OTf can be employed as well. Moreover, the combination of such metal salts with a coordinating ligand or discrete complexes can be employed. Examples of such combinations are Fe(OTf)₃ and N,N,N',N'-tetramethylethylenediamine or Mg(OTf)₂ and 15-crown-5, wherein 15-crown-5 stands for 1,4,7,10,13-pentaoxacyclopentadecane. An example for a discrete metal complex is represented by (Ph₃P)₂PdCl₂.

Another class of Lewis acids is represented by compounds containing main group elements in which the main group element represents the Lewis acid site, e.g. B(C₆F₅)₃ or Me₃SiOTf.

Yet another class of preferred Lewis Acids are organometallic species like Cp*Ru(MeCN)₃PF₆, wherein Cp* stands for pentamethylcyclopentadienyl.

Preferred heterogeneous Lewis acids can be represented by species of discretionary selected subclasses created by interaction/bonding of homogeneous Lewis acids e.g. metal complexes, metal salts or organometallic species with polymeric organic or inorganic backbones. An example of such subclass is a polystyrene matrix with bonded Sc(OTf)₂ groups. Such an adjuvant can be prepared e.g. by interaction of a polystyrene sulfonic acid resin e.g. Amberlyst 15 with Sc(OTf)₃. The number of equivalents of Lewis acid functions can be determined in this case by different ways e.g. by acid base determination of the unreacted sulfonic acid groups, by quantitative determination of the liberated triflic acid and by ICP measurement of the amount of Sc on the resin.

Solvents generally do not procure any benefits to the conversion of the compound containing an α-oxy carboxylic acid group to the corresponding compound containing an α-oxy phosphorus group as compared to the same reaction conducted in the absence of solvents and adjuvants.

The Broensted, Lewis acids and the quenching agent can, as recited above, be used together with a solvent or a mixture of solvents. Generally solvents inert to the reagents can be used. The solvent does not react (to any substantial degree) with the reagents involved in the reaction. Typical examples of suitable solvents are as follows: sulfolane, anisole; fluorobenzene; chlorinated and fluorinated hydrocarbons such as chlorobenzene, tetrachloroethane, tetrachloroethylene, dichloroethane, dichloromethane; polar solvents like diglyme, glyme, diphenyloxide, polyalkylene glycol derivatives with capped OH groups such as OR*** where R*** is a low alkyl or acyl group; aliphatic hydrocarbons such as hexane, heptane, cyclohexane; non-cyclic ethers like dibutyl ether, diethyl ether, diisopropyl ether, dipentylether, and butylmethylether; cyclic ethers like tetrahydrofuran, dioxane, and tetrahydropyran; mixed cyclic/non-cyclic ethers like cyclopentylmethylether; aromatic solvents like toluene, benzene, xylene; organic acetates like ethylacetate: organic nitriles like acetonitrile, benzonitrile; silicon fluids like polymethylphenyl siloxane or mixtures thereof; ionic liquids like 1-n-butyl-imidazolium trifluoromethanesulfonate, and 1-ethyl-3-methylimidazolium bis(trifluoromethanesulfonyl)imide. Preferred solvents are 1,4-dioxane, 1,2-dimethoxyethane, cylopentylmethylether, ethylacetate, acetonitrile, chlorobenzene, toluene, dichloromethane, 1-ethyl-3-methyl-1,3-imidazolium bis(trifluoromethylsulfonyl)imide, 1-n-butyl-1,3-imidazolium triflate, or mixtures thereof.

When using solid Broensted or Lewis acids, it is preferable to use polar solvents capable of solubilizing the reagents and at least in part the products formed. Suitable solvents shall be used in a ratio of the number of equivalents of α-oxy carboxylic acid functions in the compound containing an α-oxy carboxylic acid group to the number of moles of solvent of from 1 : 0.1 to 1 : 100, preferably 1 : 1 to 1 : 80. These solvents can also be used for preparing a solution of either the P-X component or the compound containing an α-oxy carboxylic acid group utilised in the reaction. Of course, in addition to these solvents, the liquid Broensted and Lewis acids or solid Broensted or Lewis acids, dissolved or dispersed in a solvent e.g. as described above, can be used together with the other reactants in the sequence recited in the claims.

The reactions in accordance with this invention are conducted in a manner routinely known in the domain of the technology. The equivalent ratio between the adjuvants selected from Broensted or Lewis acid referred to the α-oxy carboxylic acid functions in the compound containing an α-oxy carboxylic acid group can be in the range of 0.01 : 1 to 20 : 1. As illustrated in the experimental showing, the method can be conducted, in one preference, by combining the reaction partners at 25 to 90 °C. If required the reaction mixture can be heated to a temperature usually within the range between 30 and 130 °C. The duration of the reaction at the selected temperatures is from 1 minute to 7 days. The upper temperature aims at preventing any substantial undesirable decomposition of the reactants, adjuvants, solvents or of the intermediates and products formed in these reactions. It is understood and well known, that the decomposition temperature of the partners or solvents can vary depending on physical parameters such as pressure and the qualitative and quantitative parameters of the ingredients in the reaction mixture. The reaction can be conducted at ambient pressure. The duration of the reaction can vary from virtually instantaneous, e.g. 1 minute, to a preferred period of time from e.g. 1 hour to 60 hours. This duration can include the gradual addition of the reactants. In one method setup, the P-X component is added to the mixture of the compound containing an α-oxy-carboxylic acid group and the adjuvant and the mixture is heated to a temperature in the range between 30 and 130 °C.

Optionally a quenching agent with or without an additional base can be added after completing the reaction of the compound containing an α-oxy carboxylic acid group with the P-X component either in-situ to the reaction mixture or to the isolated primary reaction product containing unreacted P-X bonds or in the reverse mode by adding the primary reaction product containing unreacted P-X bonds in-situ or as an isolated product to the quenching agent. The equivalent ratio of unreacted P-X bonds in the primary reaction product of the compound containing an α-oxy carboxylic acid group and the P-X component to reactive functions in the quenching agent can be in the range of from 1 : 0.1 to 1 : 10, preferably 1 : 0.5 to 1 : 3. The addition can be carried out in a temperature range from between -80 °C to 100 °C. Afterwards the reaction medium can be stirred at the addition temperature for a reaction time of 1 minute to 7 days or the reaction mixture can be heated to 25 °C to 150 °C for a reaction time of 1 minute to 7 days. The quenching agent can be dissolved in a non reactive solvent in an equivalent ratio of reactive functions in the quenching agent : moles of solvent of from 1 : 0.5 to 1 : 50. Organometallic reagents can be purchased as pure compounds or solutions or can be synthesised by common procedures known in the art.

The reaction product formed can be recovered in an appropriate manner. The reaction product can, for example, be isolated with the aid of known technologies from the crude reaction mixture. Adjuvants of heterogeneous nature can be removed by filtration from the crude reaction mixture. Moreover, volatile adjuvants can be removed by distillation from the crude reaction mixture, possibly with the aid of a co-solvent forming an azeotrope with the adjuvant. The utilised co-solvent can be present from the beginning or later on added to the reaction mixture. In another approach, the product can be recovered from the reaction mixture by extraction with a solvent insoluble in the adjuvant used, e.g. from a water insoluble adjuvant by extraction with water or e.g. from an aqueous mixture by the aid of a water immiscible organic solvent. Separation can be achieved by crystallisation or precipitation by addition of a suitable co-solvent/diluent. The precipitated material can be separated e.g. by filtration or centrifugation and further crystallized to meet desired purities. In another approach, the final product can be recovered as a fully or partially neutralised salt. Suitable salts preferentially include alkaline and earth alkaline metals cations. The final salt products can be routinely isolated and purified e.g. by re-crystallisation to thus yield the purified salt, possibly as a hydrate or solvate. Alternatively, the salts and their hydrates can be prepared from the isolated compound containing an α-oxy phosphorus group. The reaction product can be isolated and purified by distillation ensuring no substantial decomposition during this process. The isolation and purification of the reaction products formed require the use of routine measures well known to the notional artisan, such as treatment with activated carbon to remove potential residual traces of sulphur containing compounds.

During the conversion of the compound containing an α-oxy carboxylic acid group into the corresponding compound containing an α-oxy phosphorus group, one equivalent of CO will be formed for each equivalent of α-carboxylic acid function converted into the corresponding α-oxy phosphorus group. CO will leave the reaction mixture contaminated with hydrogen chloride or hydrogen bromide. After purification by established procedures the CO can be used in many applications like e.g. as a fuel; in combination with hydrogen for methanol and Fischer-Tropsch hydrocarbons manufacture; for hydroformylation reactions; for alcohol carbonylation, e.g. carbonylation of methanol to acetic acid; or the conversion of methylacetate to acetic anhydride.

The method in accordance with the invention herein is illustrated by a series of actual examples as follows:

### Example 1

In a three-necked round-bottom flask under nitrogen atmosphere equipped with a mechanical stirrer, a thermometer, a condenser and a dropping funnel 0.36 g (4 mmol) methoxyacetic acid was mixed with 0.38 g (4 mmol) methanesulfonic acid. 0.54 g (4 mmol) phosphorus trichloride was added drop-wise. After completed addition the reaction mixture was stirred for 1 h at 40 °C. During the addition and the reaction time the evolution of CO was observed. A part of the mixture was transferred into a NMR-tube and analysed by ¹H- and ³¹P-NMR spectroscopy. Methoxymethylphosphonic dichloride was detected at 29.3 %w/w and methoxymethyl-phosphonochloridic acid anhydride at 51.5 %w/w arising from partial hydrolysis of the desired methoxymethylphosphonic dichloride.

### Example 2

In a three-necked round-bottom flask under nitrogen atmosphere equipped with a mechanical stirrer, a thermometer, a condenser and a dropping funnel 1.80 g (20 mmol) methoxyacetic acid was mixed with 5 ml methanesulfonic acid. 2.75 g (20 mmol) phosphorus trichloride was added drop-wise. After completed addition the reaction mixture was stirred for 5 h at 50 °C. During the addition and the reaction time the evolution of CO was observed. Then 10 ml H₂O was added and the obtained liquid was analysed by ³¹P-NMR spectroscopy. Methoxymethylphosphonic acid was detected at 88.4 %w/w.

### Example 3

In a three-necked round-bottom flask under nitrogen atmosphere equipped with a mechanical stirrer, a thermometer, a condenser and a dropping funnel 9.01 g (100 mmol) methoxyacetic acid was mixed with 20 ml 1-ethyl-3-methyl-1,3-imidazolium bis(trifluoromethylsulfonyl)imide. 13.73 g (100 mmol) phosphorus trichloride was added drop-wise. After completed addition the reaction mixture was stirred for 4 h at 70 °C. During the addition and the reaction time the evolution of CO was observed. 20 ml H₂O was added and the phases were separated. The aqueous phase was analysed by ³¹P-NMR spectroscopy. Methoxymethylphosphonic acid was detected at 66.6 %w/w.

### Example 4

In a three-necked round-bottom flask under nitrogen atmosphere equipped with a mechanical stirrer, a thermometer, a condenser and a dropping funnel 6.70 g (50 mmol) diglycolic acid was mixed with 15 ml methanesulfonic acid. 13.73 g (100 mmol) phosphorus trichloride was added drop-wise. After completed addition the reaction mixture was stirred for 2 h at 50 °C followed by 1 h at 80 °C. During the addition and the reaction time the evolution of CO was observed. Then 10 ml H₂O was added and the obtained liquid was heated to 120 °C for 2 h. The resulting liquid analysed by ¹H- and ³¹P-NMR spectroscopy. 2-Oxapropane-1,3-diphosphonic acid was detected at 34.9 %w/w and hydroxymethylphosphonic acid at 47.1 %w/w.
2 ml of the obtained liquid was mixed with 4 ml NaOH solution (50%) and heated to 140 °C for 2 h. The resulting liquid was analysed. The amount of hydroxymethylphosphonic acid increased to 59.3 %w/w.
In a second trial 2 ml of the obtained liquid was mixed with 4 ml NaOH solution (50%), 200 mg sodium bromide was added and the obtained solution heated to 140 °C for 2 h. The resulting liquid was analysed. The amount of hydroxymethylphosphonic acid increased to 55.4 %w/w.

### Example 5

In a three-necked round-bottom flask under nitrogen atmosphere equipped with a mechanical stirrer, a thermometer, a condenser and a dropping funnel 7.06 g (100 mmol) glycolic acid was mixed with 20 ml 1-ethyl-3-methyl-1,3-imidazolium bis(trifluoromethylsulfonyl)imide. 13.73 g (100 mmol) phosphorus trichloride was added drop-wise. After completed addition the reaction mixture was stirred for 6 h at 100 °C. During the addition and the reaction time the evolution of CO was observed. 10 ml H₂O was added and the obtained mixture was heated to 100 °C for 1.5 h. After cooling down to room temperature the phases were separated. The aqueous phase was analysed by ³¹P-NMR spectroscopy. Hydroxymethylphosphonic acid was detected at 9.1 %w/w.

### Example 6

In a three-necked round-bottom flask under nitrogen atmosphere equipped with a mechanical stirrer, a thermometer, a condenser and a dropping funnel 13.73 g (0.1 mol) phosphorus trichloride was mixed with 9.01 g (0.1 mol) methoxyacetic acid. The reaction mixture was stirred for 4 h at 70 °C. During this time the evolution of CO was observed. Then 10 ml water was added to the reaction mixture and the obtained liquid was analyzed by ³¹P-NMR spectroscopy. Methoxymethylphosphonic acid was detected at 13.0 %w/w.

### Example 7

In a three-necked round-bottom flask under nitrogen atmosphere equipped with a mechanical stirrer, a thermometer, a condenser and a dropping funnel 13.73 (0.1 mol) phosphorus trichloride was mixed slowly with 11.40 g (0.1 mol) trifluoroacetic acid and drop-wise 9.01 g (0.1 mol) methoxyacetic acid was added. After completed addition the reaction was heated to 55 °C for 4 h. During the addition and reaction time the evolution of CO was observed. Then 10 ml water was added and the obtained liquid was analyzed by ³¹P-NMR spectroscopy. Methoxymethylphosphonic acid was detected at 49.9 %w/w.

### Example 8

In a three-necked round-bottom flask under nitrogen atmosphere equipped with a mechanical stirrer, a thermometer, a condenser and a dropping funnel 13.73 g (0.1 mol) phosphorus trichloride and 4.10 g (0.01 mol) aluminium trifluoromethanesulfonate were mixed with 50 ml acetonitrile. Drop-wise 9.01 g (0.1 mol) methoxyacetic acid was added. The reaction mixture was heated to 50 °C for 3 h. During the addition and reaction time the evolution of CO was observed. Then 10 ml of water was added and the formed precipitate was filtered off. The obtained liquid was analyzed by ³¹P-NMR spectroscopy and methoxymethylphosphonic acid was detected at 34.9 %w/w.

### Example 9

In a three-necked round-bottom flask under nitrogen atmosphere equipped with a mechanical stirrer, a thermometer, a condenser and a dropping funnel 13.73 g (0.1 mol) phosphorus trichloride and 21.50 g (0.1 mol) Amberlyst-15 (hydrogen form, dry) were mixed with 50 ml chlorobenzene. Then 9.01 g (0.1 mol) methoxyacetic acid was added drop-wise and the reaction mixture was heated to 45 °C for 2.5 h. During the addition and reaction time the evolution of CO was observed. Then 10 ml of water was added and the Amberlyst-15 was filtered off. The obtained liquid was analyzed by ³¹P-NMR spectroscopy. Methoxymethylphosphonic acid was detected at 78.5 %w/w.

### Example 10

In a three-necked round-bottom flask under nitrogen atmosphere equipped with a mechanical stirrer, a thermometer, a condenser and a dropping funnel and 13.73 g (0.1 mol) phosphorus trichloride was mixed with 15 ml methanesulfonic acid. Drop-wise 15.00 g (0.084 mol) 3,6,9-trioxadecanoic acid was added and the reaction mixture was heated to 50 °C for 4 h. During the addition and reaction time the evolution of CO was observed. The reaction mixture was allowed to cool down and 10 ml water was added. The solution was analyzed by ³¹P-NMR spectroscopy and 1-phosphono-2,5,8-trioxanonane was detected at 82.0 %w/w.

### Example 11

In a three-necked round-bottom flask under nitrogen atmosphere equipped with a mechanical stirrer, a thermometer, a condenser and a dropping funnel 6.87 g (0.05 mol) phosphorus trichloride and 10.75 g (0.05 mol) Amberlyst-15 (hydrogen form, dry) were mixed with 50 ml chlorobenzene. Slowly 6.90 g of (0.05 mol) 5-chloro-3-oxapentanoic acid was added drop-wise. After completed addition the reaction mixture was heated to 50 °C for 4 h. During the addition and reaction time the evolution of CO was observed. Then 10 ml water was added and the Amberlyst-15 was filtered off. The solution was analyzed by ¹H- and ³¹P-NMR spectroscopy and 4-Chloro-2-oxabutanyl-1-phosphonic acid observed at 58.9 %w/w.

### Example 12

In a three-necked round-bottom flask under nitrogen atmosphere equipped with a mechanical stirrer, a thermometer, a condenser and a dropping-funnel 4.50 g (0.05 mol) methoxyacetic acid was mixed with 15 ml methanesulfonic acid. Drop-wise 7.83 g (0.05 mol) diethyl chlorophosphite was added. Then the reaction mixture was heated to 45 °C for 4 h. During the reaction time the evolution of CO was observed. Afterwards 10 ml of water was added and the reaction mixture was analyzed by ¹H- and ³¹P-NMR spectroscopy and diethyl methoxymethylphosphonic acid was detected at 21.9 %w/w.

### Example 13

In a three-necked round-bottom flask under nitrogen atmosphere equipped with a mechanical stirrer, a thermometer, a condenser and a dropping funnel 13.73 g (0.1 mol) phosphorus trichloride was mixed with 15 ml methanesulfonic acid. Then 11.61 g (0.1 mol) 2-tetrahydrofuroic acid was added drop-wise. After completed addition the reaction mixture was stirred for 3 h at 50 °C. During the addition and reaction time the evolution of CO was observed. The reaction mixture was cooled down to room temperature and 10 ml water was added. The obtained liquid was analyzed by ¹H- and ³¹P-NMR spectroscopy. 2-Phosphono-tetrahydrofuran was detected at 19.8 %w/w.

### Example 14

In a three-necked round bottom flask under nitrogen atmosphere equipped with a mechanical stirrer, a thermometer, a condenser and a dropping funnel 13.73 (0.1 mol) phosphorus trichloride and 21.50 g (0.1 mol) Amberlyst-15 (hydrogen form, dry) were mixed with 50 ml chlorobenzene. Drop-wise 9.01 g (0.1 mol) methoxyacetic acid was added. After completed addition the reaction mixture was stirred for 4 hours at 60 °C. During this time the evolution of CO was observed. Then 11.01 g (0.1 mol) catechol and 30.36 g (0.3 mol) triethylamine were added. Afterwards the temperature was increased to 70 °C and stirring was continued for 2.5 h. The reaction medium was cooled to room temperature and all solids were removed by filtration. All volatiles were removed in vacuum and the remaining liquid was analysed by ¹H- and ³¹P-NMR spectroscopy. 2-Methoxymethyl-1,3,2-benzodioxaphosphole-2-oxide was detected at 20.6 %w/w.

### Example 15

In a three-necked round-bottom flask under nitrogen atmosphere equipped with a mechanical stirrer, a thermometer, a condenser and a dropping-funnel 3.89 g (43.1 mmol) methoxyacetic acid was mixed with 3 ml methanesulfonic acid. Drop-wise 5.00 g (21.6 mmol) 1,2-bis(dichlorophosphino)ethane was added. Then the reaction mixture was heated to 50 °C for 4 h. During the reaction time the evolution of CO was observed. Afterwards 5 ml of water was added and the reaction mixture was analyzed by ¹H- and ³¹P-NMR spectroscopy and ethylene-1,2-bis(methoxymethylphosphinic acid) was detected at 71.7 %w/w.

### Example 16

In a three-necked round-bottom flask under nitrogen atmosphere equipped with a mechanical stirrer, a thermometer, a condenser and a dropping funnel 2.38 g (20 mmol) 5-amino-3-oxapentanoic acid was mixed with 3 ml methanesulfonic acid. 2.75 g (20 mmol) phosphorus trichloride was added drop-wise. After completed addition the reaction mixture was stirred for 4 h at 60 °C. During the reaction time the evolution of CO was observed. Then 2 ml H₂O was added and the obtained liquid analysed by ¹H-and ³¹P-NMR spectroscopy. 4-Amino-2-oxabutanyl-1-phosphonic acid was detected at 2.4 %w/w

### Example 17

In a three-necked round-bottom flask under nitrogen atmosphere equipped with a mechanical stirrer, a thermometer, a condenser and a dropping funnel 3.00 g (20 mmol) 2-methoxy-butane-1,4-dioic acid was mixed with 3 ml methanesulfonic acid. 2.75 g (20 mmol) phosphorus trichloride was added drop-wise. After completed addition the reaction mixture was stirred for 6 h at 40 °C. During the reaction time the evolution of CO was observed. Then 2 ml H₂O was added and the obtained liquid analysed by ¹H-and ³¹P-NMR spectroscopy. 3-Methoxy-3-phosphono-propionic acid was detected at 3.3 %w/w

### Example 18

In a three-necked round bottom flask under nitrogen atmosphere equipped with a mechanical stirrer, a thermometer, a condenser and a dropping funnel 13.73 (0.1 mol) phosphorus trichloride and 21.50 g (0.1 mol) Amberlyst-15 (hydrogen form, dry) were mixed with 50 ml chlorobenzene. Drop-wise 9.01 g (0.1 mol) methoxyacetic acid was added. After completed addition the reaction mixture was stirred for 4 hours at 60 °C. During this time the evolution of CO was observed. Then 12.02 g (0.2 mol) n-propanol and 30.36 g (0.3 mol) triethylamine were added. Afterwards the temperature was increased to 70 °C and stirring was continued for 2.5 h. The reaction medium was cooled to room temperature and all solids were removed by filtration. All volatiles were removed in vacuum and the remaining liquid was analysed by ¹H- and ³¹P-NMR spectroscopy. Di-propyl-methoxymethylphosphonic acid was detected at 19.9 %w/w.

### Example 19

In a three-necked round-bottom flask under nitrogen atmosphere equipped with a mechanical stirrer, a thermometer, a condenser and a dropping funnel 9.01 g (100 mmol) glycolic acid was mixed with 15 ml methanesulfonic acid. 13.73 g (100 mmol) phosphorus trichloride was added drop-wise. After completed addition the reaction mixture was stirred for 5 h at 80 °C. During the addition and the reaction time the evolution of CO was observed. Then 10 ml H₂O was added and the obtained liquid was heated to 120 °C for 2 h. The resulting liquid analysed by ³¹P-NMR spectroscopy. Hydroxymethylphosphonic acid was detected at 24.8 %w/w.

### Example 20

In a three-necked round-bottom flask under nitrogen atmosphere equipped with a mechanical stirrer, a thermometer, a condenser and a dropping funnel 2.74 g (20 mmol) phosphorus trichloride was mixed with 5 ml acetonitrile and 4.45 g (20 mmol) trimethylsilyl trifluoromethanesulfonate was added. The resulting mixture was stirred for 3 h. Slowly, 1.80 g (20 mmol) methoxyacetic acid was added drop-wise and stirring was continued for 3 h at room temperature. During the addition and the reaction time the evolution of CO was observed. Then 5 ml H₂O was added and the obtained liquid was analysed by ³¹P-NMR spectroscopy. Methoxymethylphosphonic acid was detected at 43.3 w/w %.

### Example 21

In a three-necked round-bottom flask under nitrogen atmosphere equipped with a mechanical stirrer, a thermometer, a condenser and a dropping funnel 6.70 g (50 mmol) diglycolic acid was mixed with 15 ml 1-ethyl-3-methyl-1,3-imidazolium bis(trifluoromethylsulfonyl)imide. 13.73 g (100 mmol) phosphorus trichloride was added drop-wise. After completed addition the reaction mixture was stirred for 3 h at 120 °C. During the addition and the reaction time the evolution of CO was observed. 20 ml H₂O was added and the obtained mixture was heated to 100 °C for 1 h. After cooling down to room temperature the phases were separated. The aqueous phase was analysed by ³¹P-NMR spectroscopy. Hydroxymethylphosphonic acid was detected at 3.3 %w/w.

### Example 22

In a three-necked round bottom flask under nitrogen atmosphere equipped with a mechanical stirrer, a thermometer, a condenser and a dropping funnel under nitrogen atmosphere 1.80 g (20 mmol) methoxyacetic acid was mixed with 1.92 g (20 mmol) methanesulfonic acid. Drop-wise 2.75 (20 mmol) phosphorus trichloride was added. After completed addition the reaction mixture was stirred for 30 min. During this time the evolution of CO was observed. Then 6.07 g (60 mol) triethylamine and 1.76 g (20 mmol) N,N'-dimethylethylenediamine were added. Afterwards the mixture was heated to 100 °C for 6 h. The reaction medium was cooled to room temperature, 30 ml chlorobenzene was added and all solids were removed by filtration. All volatiles were removed in vacuum and the remaining oil was analysed by ¹H- and ³¹P-NMR spectroscopy. 1,3-Dimethyl-2-methoxymethyl-1,3,2-diazaphospholidine-2-oxide was detected at 14.4 %w/w.

### Example 23

In a three-necked round bottom flask under nitrogen atmosphere equipped with a mechanical stirrer, a thermometer, a condenser and a dropping funnel under nitrogen atmosphere 2.21 g (10 mmol) chlorodiphenylphosphine was mixed with 1.33 g (10 mmol) aluminium trichloride and stirred for 30 min at 50 °C. Drop-wise 0.90 (10 mmol) methoxyacetic acid was added. After completed addition the reaction mixture was stirred for 4 h at 80 °C. During this time the evolution of CO was observed. Then 3.20 g (30 mol) sodium hydroxide solution (50% in H₂O) was added. Afterwards all volatiles were removed in vacuum and the remaining solid was taken up in 100 ml methanol and filtered. Again all volatiles were removed nd the remaining solid was analysed by ¹H- and ³¹P-NMR spectroscopy. Methoxymethyl-diphenylphosphine oxide was detected at 22.2 %w/w.

## Claims

1. A method for the manufacture of compounds containing an α-oxy phosphorus group selected from the formulae:
R³[-O-C(R¹)(R²)ₘ(P(O)R^{a}R^{b})₂₋ₘ]ₙ -III-
R³[-C(OR¹)(R²)ₘ(P(O)R^{a}R^{b})₂₋ₘ]ₙ -IV-
is obtained by reacting a compound containing an α-oxy-carboxylic acid group having a formula selected from:
R³[-O-C(R)(R²)ₘ(COOM')₂₋ₘ]ₙ -V-
R³[-C(OR¹)(R²)ₘ(COOM')₂₋ₘ]ₙ -VI-
wherein R^{a} and R^{b} are independently selected from: Cl; Br; a C₁₋₂₀ hydrocarbon group in branched, linear, cyclic, aromatic, heterocyclic or heteroaromatic configuration; a silyl group independently substituted by C₁₋₂₀ hydrocarbon groups in branched, linear, cyclic, aromatic, heterocyclic or heteroaromatic configuration; OR" or N(R"')₂, wherein R" can be selected from a C₁₋₂₀ hydrocarbon group in branched, linear, cyclic, aromatic, heterocyclic or heteroaromatic configuration, or a silyl group independently substituted by C₁₋₂₀ hydrocarbon groups in branched, linear, cyclic, aromatic, heterocyclic or heteroaromatic configuration, wherein R'" can be independently selected from H, a C₁₋₂₀ hydrocarbon group in branched, linear, cyclic, aromatic, heterocyclic or heteroaromatic configuration, or a silyl group independently substituted by C₁₋₂₀ hydrocarbon groups in branched, linear, cyclic, aromatic, heterocyclic or heteroaromatic configuration; if R^{a} or R^{b} is a N(R"')₂ group, then the two R'" groups of the N(R"')₂ group can be connected together with one R'" group being a C₂₋₂₀ hydrocarbon group in branched, linear, cyclic, aromatic, heterocyclic or heteroaromatic configuration and the other R"' being a direct bond; R^{a} and R^{b} can be connected, then R^{a} is a C₂₋₂₀ hydrocarbon group in branched, linear, cyclic, aromatic, heterocyclic or heteroaromatic configuration and R^{b} is a direct bond; if R^{a} and R^{b} are OR" groups, then R" of the first OR" group can be a C₁₋₂₀ hydrocarbon group in branched, linear, cyclic, aromatic, heterocyclic or heteroaromatic configuration and the R" of the second OR" group a direct bond; if R^{a} and R^{b} are N(R"')₂ groups, then one R'" group of the first N(R"')₂ group can be a C₁₋₂₀ hydrocarbon group in branched, linear, cyclic, aromatic, heterocyclic or heteroaromatic configuration and one R"' of the second N(R"')₂ group is a direct bond to this R'" group of the first N(R"')₂ group; wherein R^{b} can be E with E being a C₁₋₂₀ hydrocarbon group in branched, linear, cyclic, aromatic, heterocyclic or heteroaromatic configuration; m can be 0 or 1; n is a selected integer from 1 to 100000; M is represented by H or alkaline, earth alkaline, ammonium or protonated amine species;
R¹ and R² are independently selected from: H, hydrocarbon groups in branched, linear, cyclic, aromatic, heterocyclic or heteroaromatic configuration having from 1 to 100 carbon atoms; when R¹ in formulae -IV- and -VI- contains an aromatic or heteroaromatic group, then there must be at least two alkylene carbon atoms between the aromatic or heteroaromatic group and the oxygen atom;
R³ is selected from hydrocarbon groups in branched, linear, cyclic or heterocyclic configuration having from 1 to 200000 carbon atoms, whereby [-O-C(R¹)(R²)ₘ(COOM')₂₋ₘ] in formula -V- and [-C(OR¹)(R²)ₘ(COOM')₂₋ₘ] in formula -VI- can be distributed on the carbon chain of R³ by mono or di substitution on the individual R³ carbon atoms, evenly, randomly or in an alternating fashion or combinations thereof with the proviso that n is an integer which is equal to or smaller than 2 times the number of carbon atoms in R³;
when n = 1, R³ can be H or Y-B[-O-A]ₓ- wherein x is 0-50; wherein A is selected from linear and branched hydrocarbons having from 2 to 100 carbon atoms and B is selected from hydrocarbon groups in branched, linear, cyclic, heterocyclic, aromatic or heteroaromatic configuration having from 1 to 100 carbon atoms; Y is selected from hydrocarbon groups in branched, linear, cyclic, heterocyclic, aromatic or heteroaromatic configuration having from 1 to 100 carbon atoms;
when Y is an aromatic or heteroaromatic group and x is 0, then B must comprise at least 2 alkylene carbon atoms between the heteroaromatic or aromatic group and the directly connected oxygen atom; wherein Y can represent: H, an unsubstituted or substituted double bond, an unsubstituted or substituted triple bond, -COZ, -O-COZ, -OR, -NR₂, -SiR'₃, -Si(OR')₃, -B(OR')₂, -P⁺R^{'}₃, -N⁺R₃, -CN, halogen, -P(O)_{z}Z₂, -NR-COZ, -N(COR^{'})2, -NR-CSZ, -NR-C(NR)NR₂, -CSZ, -O-CSZ, -NR-SO₂R^{'}, -SO_{y}Z, -O-SO_{y}Z; wherein z is 0 or 1;
wherein y is 0, 1 or 2; wherein Z is H, R, -OR, -NH₂, -NR₂, and -NHR wherein R is independently selected from H, hydrocarbon groups in branched, linear, cyclic, heterocyclic, aromatic or heteroaromatic configuration having from 1 to 100 carbon atoms; R is independently selected from hydrocarbon groups in branched, linear, cyclic, heterocyclic, aromatic or heteroaromatic configuration having from 1 to 100 carbon atoms; if at least two R or R' groups are present in the functional group, then these groups can be connected, whereby one R or R' group is a direct bond and the other is a hydrocarbon group in branched, linear, cyclic, heterocyclic, aromatic or heteroaromatic configuration having from 1 to 100 carbon atoms, if R and R' are connected to different atoms, or 2 to 100 carbon atoms, if R and R' are connected to the same atom; B can also be a direct bond when Y is H or a hydrocarbon group in branched, linear, cyclic, heterocyclic, aromatic or heteroaromatic configuration having from 1 to 100 carbon atoms;
when n is 1, R³ can be connected to R¹ and be a direct bond, while R¹ is C₁₋₁₀ alkylene group in linear configuration;
when m is 1, R¹ and R² can also be connected, with R² being a direct bond and R¹ being a C₂₋₁₂ linear alkylene group;
and a P-X component having at least one P-X bond, whereby the phosphorus atom of the P-X bond has the +3 oxidation state with X being Cl or Br, by adding the P-X component to the compound containing an α-oxy carboxylic acid group, or the reverse, in an equivalent ratio of α-oxy carboxylic acid functions in the compound containing an α-oxy carboxylic acid group : P-X bonds in the P-X component of from 1 : 3 to 3 : 1, optionally followed by adding a quenching agent after completing the reaction of the P-X component with the compound containing an α-oxy carboxylic acid group or the reverse by adding the primary reaction product of the reaction of the P-X component with the compound containing an α-oxy carboxylic acid group to the quenching agent, and recovering the product formed.

2. The method in accordance with Claim 1 wherein the P-X component is selected from the following compounds:
R^{a}R^{b}PX or R^{a}(X)P-E-P(X)R^{a}
wherein X is selected from Cl or Br.

3. The method in accordance with any one of Claims 1 to 2 wherein the product formed by the reaction of the compound containing an α-oxy carboxylic acid group with a P-X component is further reacted with a quenching agent, if the third and/or fourth substituent of P¹ in formula -I- or R^{a} and/or R^{b} in formulae -III- or -IV- are Cl or Br, with the quenching agent selected from the group of:
- H₂O, M¹(OH)ₘ₁, R^{c}-OH, (R^{c}-O)ₘ₁M², R^{c}[-O-z₁]ₘ₃-OH, (R^{c}[-O-Z]ₘ₃-O)ₘ₁M²;
- H₂S, R^{c}-SH, (R^{c}-S)ₘ₁M²;
- NH₃, NH₃, M²(NH₂)ₘ₁, R^{c}NH₂, R^{c}R^{d}NH, (R^{c}NH)ₘ₁M², (R^{c}R^{d}N)ₘ₁M², R^{c}[-O-Z₁]ₘ₃-NH₂, (R^{c}[-O-Z₁]ₘ₃-NH)ₘ₁M², R^{c}[-O-Z₁]ₘ₃-NH-[Z₂-O-]ₘ₄-R^{d}, (R^{c}[-O-Z₁]ₘ₃-N-[Z₂-O-]ₘ₄-R^{d})ₘ₁M²;
- H₂N-C(O)R^{c}, R^{c}NH-C(O)R^{d}, M²(N(H)-C(O)R^{c})ₘ₁, M²(N(R^{c})-C(O)R^{d})ₘ₁;
- R^{c}CO₂H, (R^{c}CO₂)ₘ₁M¹;
- R^{c}COSH, (R^{c}COS)ₘ₁M¹;
- R^{c}CS₂H, (R^{c}CS₂)ₘ₁M;
- R^{e}Li, R^{e}MgX', R^{e}₂Mg, R^{e}ZnX', R^{e}₂Zn, R^{e}Cu, R^{e}Cu + LiCl, R^{e}Cu + LiCN, R^{e}Cu + MgCl₂, R^{e}Cu + ZnCl₂;
- difunctional compounds containing functional groups selected from OH, NH₂, NHR, COOH or SH separated by a spacer inclusive of:
o HO-Y'-OH, H[-O-Z₁]ₘ₃-OH;
o H₂N-Y'-NH₂, R^{c}HN-Y'-NH₂, R^{c}HN-Y'-NHR^{d}, H₂N-Z₁[-O-Z₂]ₘ₃-NH₂;
o H₂N-Y'-OH, R^{c}HN-Y'-OH;
o H₂N-Y'-CO₂H, R^{c}HN-Y'-CO₂H;
o HO-Y'-CO₂H;
o HS-Y'-CO₂H;
o HS-Y'-SH;
- polyfunctional compounds with a single functional group or different functional groups selected from OH, NH₂, NHR, COOH or SH inclusive of:
o polyols;
o monomeric or polymeric aminosugars;
o polymers with hydroxyl functions;
o polymers with amine functions;
wherein M¹ can be alkaline, earth alkaline or Zn; wherein M² can be Li, Na, K, Mg, Zn; wherein X' can be Cl, Br, I;
wherein m1 is 1 or 2, depending on the valency of the metal, for monocations m1 is 1 and for dications m1 is 2; wherein m3 and m4 can be independently selected from 1 to 100;
wherein R^{c} and R^{d} can be selected from a C₁₋₂₀ hydrocarbon group in branched, linear, cyclic, aromatic, heterocyclic or heteroaromatic configuration, or a silyl group independently substituted by C₁₋₂₀ hydrocarbon groups in branched, linear, cyclic, aromatic, heterocyclic or heteroaromatic configuration, a mono- or polyhalogen substituted (F, Cl, Br, I, or mixtures thereof) C₁₋₂₀ hydrocarbon group in branched, linear, cyclic, aromatic, heterocyclic or heteroaromatic configuration; wherein R^{e} can be selected from a Z₁₋₂₀ hydrocarbon group in branched, linear, cyclic, aromatic, heterocyclic or heteroaromatic configuration, substituted vinyl groups, substituted allyl groups;
wherein Y' can be selected from a C₁₋₂₀ hydrocarbon group in branched, linear, cyclic, aromatic, heterocyclic or heteroaromatic configuration; wherein Z₁ and Z₂ can be independently selected from linear and branched hydrocarbons having from 2 to 20 carbon atoms.

4. The method in accordance with any one of Claims 1 to 3 wherein the P-X component is selected from:
- PCl₃;
- PBr₃;
- Cl₂PCH₂CH₂PCl₂;
- R^{a}R^{b}PCl, wherein R^{a} and R^{b} are independently selected from: a C₁₋₁₀ hydrocarbon group in branched, linear, cyclic, aromatic, heterocyclic or heteroaromatic configuration; or OR", wherein R" can be selected from a C₁₋₁₀ hydrocarbon group in branched, linear, cyclic, aromatic, heterocyclic or heteroaromatic configuration; R^{a} and R^{b} can be connected, then R^{a} is a C₂₋₁₀ hydrocarbon group in branched, linear, cyclic, aromatic, heterocyclic or heteroaromatic configuration and R^{b} is a direct bond; if R^{a} and R^{b} are OR" groups, then R" of the first OR" group can be a C₁₋₁₀ hydrocarbon group in branched, linear, cyclic, aromatic, heterocyclic or heteroaromatic configuration and the R" of the second OR" group a direct bond.

5. The method in accordance with any one of Claims 1 to 4 wherein the equivalent ratio of α-oxy carboxylic acid functions in the compound containing an α-oxy carboxylic acid group : P-X bonds in the P-X component is of from 1 : 2 to 2 : 1.

6. The method in accordance with any one of Claims 1 to 5 wherein the quenching agent is selected from: water, lithium hydroxide, sodium hydroxide, potassium hydroxide, magnesium hydroxide, methanol, ethanol, n-propanol, iso-propanol, n-butanol, phenol, 2,2,2-trifluoroethanol, trimethylsilanol, allyl alcohol, sodium ethanolate, potassium tert. butanolate, ammonia, lithium amide, sodium amide, dimethylamine, diethylamine, di n-propylamine, aniline, n-propylamine, iso-propylamine, n-butylamine, sec. butylamine, tert. butylamine, benzylamine, morpholine, piperidine, acetic acid, benzoic acid, propanoic acid, n-butanoic acid, n-pentanoic acid, methyl lithium, tert. butyl lithium, phenyl lithium, ethylmagnesium chloride, ethylmagnesium bromide, phenylmagnesium chloride, phenylmagnesium bromide, vinylmagnesium chloride, vinylmagnesium bromide, allylmagnesium chloride, 1,2-dihydroxybenzene, ethylene glycol, 1,3-propanediol, 2,2-dimethyl-1,3-propanediol, pinacol, 2,3-butanediol, 1,2-diaminobenzene, N,N'-dimethylethylenediamine, ethanolamine, 2-(methylamino)ethanol, glycine, alanine, phenylalanine, arginine, citrulline, glutamic acid, histidine, isoleucine, leucine, valine, lysine, ornithine, tryptophane, tyrosine, threonine, proline, glycolic acid, salicylic acid, pentaerythritol, glucosamine, galactosamine, chitosan, chitin, poly(vinyl alcohol) with a M_{W} ranging between 5000 to 500000, partially hydrolysed poly(vinyl acetate) with a M_{W} ranging between 5000 to 500000, poly(vinyl amine) with a M_{W} ranging between 1000 to 250000, partially hydrolysed poly(vinyl acetamide) with a M_{W} ranging between 1000 to 250000, poly(allylamine) with a M_{W} ranging between 1000 to 250000, linear or branched poly(ethyleneimine) with a M_{W} ranging between 1000 to 250000, 1,2-ethanedithiol, 1,3-propanedithiol, Jeffamine M-600, Jeffamine M-1000, Jeffamine M-2005, Jeffamine M-2070, Jeffamine D-230, Jeffamine D-400, Jeffamine D-2000, Jeffamine D-4000, Jeffamine HK-511, Jeffamine ED-600, Jeffamine Jeffamine ED-900, Jeffamine ED-2003, Jeffamine EDR-148, Jeffamine EDR-176, cellulose, starch, fructan, galactomannan, agar and arabinogalacton.

7. The method in accordance with any one of Claims 1 to 6 wherein the equivalent ratio of unreacted P-X bonds in the primary reaction product of the compound containing an α-oxy carboxylic acid group and the P-X component: reactive functions in the quenching agent is in the range of from 1 : 0.1 to 1 : 10.

8. The method in accordance with any one of Claims 1 to 7wherein the residual P-Cl or P-Br bonds of the primary reaction product of the compound containing an α-oxy carboxylic acid group with the P-X component are quenched in presence of a base selected from tertiary amines, N-heteroaromatic compounds, resin-bound N-heteroaromatic compounds, resin-bound tertiary amines whereby per equivalent of residual P-Cl or P-Br bond at least one equivalent of base is required.

9. The method in accordance with Claim 8 wherein an amine is the quenching agent and said amine is used at a level of at least two equivalents per residual P-Cl or P-Br bond.

10. The method in accordance with Claim 8 wherein the base is selected from triethylamine, pyridine, 4-(dimethylamino)pyridine, 2,6-lutidine, 2-picoline, 1,4-diazabicyclo[2.2.2]octane, 1,8-diazabicyclo[5.4.0]undec-7-ene, 1,8-diazabicyclo[5.4.0]undec-7-ene, poly(4-vinylpyridine), poly(2-vinylpyridine).

11. The method in accordance with any one of claims 1 to 10 wherein the process is conducted in the presence of an adjuvant selected from the group of: Lewis acids; Broensted acids; and combinations thereof.

12. The method in accordance with Claim 11 wherein the Broensted acid is a homogeneous sulfonic acid having the formula
(R*-(SO₃H)ₓ)
wherein R* is selected from:
- C₁₋₂₄ hydrocarbon groups of linear, branched, cyclic or polycyclic configuration, possibly substituted by F and/or CF₃ groups, where x is 1 to 4;
- C₆₋₁₄ aromatic or alkyl aromatic groups wherein the alkyl group can be C₆₋₂₀ where x is 1 to 3 for monoaromatic systems and 1 to 4 for diaromatic and higher systems;
- diphenyl ether or diphenylmethane where x is 1 or 2;
- C₆₋₂₀ alkyldiphenyl methane where x is 1 or 2;
- C₆₋₂₀ alkyldiphenyl ether where x is 1 or 2.

13. The method in accordance with Claim 11 wherein the Broensted acid is a heterogeneous sulfonic acid, and is selected from:
- sulfonic acids grafted onto resins comprising copolymers of styrene, ethylvinyl benzene and divinyl benzene functionalized so as to graft SO₃H groups onto the aromatic groups;
- perfluorinated resins carrying sulfonic acid groups;
- sulfonic acids deposited onto solids having a lone pair of electrons; and
- polymers and inorganic solids functionalized by chemical grafting capable of yielding sulfonic acids.

14. The method in accordance with Claim 11 wherein the adjuvant is a carboxylic acid selected from homogeneous and heterogeneous carboxylic acids.

15. The method in accordance with Claim 1 wherein the compound containing an α-oxy carboxylic acid group is selected from species -V- or -VI-where the symbols have the following meanings:
n is a selected integer from 1 to 15000;
R¹ and R² are independently selected from: hydrocarbon groups having from 1 to 20 carbon atoms;
R³ is selected from hydrocarbon groups in branched, linear, cyclic or heterocyclic configuration having from 1 to 30000 carbon atoms; when n = 1, R³ can be Y-B[-O-A]ₓ- wherein A is selected from linear and branched hydrocarbons having preferably from 2 to 10 carbon atoms and B is selected from hydrocarbon groups in branched, linear, cyclic, heterocyclic, aromatic or heteroaromatic configuration having from 1 to 50 carbon atoms; wherein Y can represent: -COZ, -O-COZ, -OR, -NR₂, -SiR^{'}₃, -Si(OR^{'})₃, -B(OR^{'})₂, -P⁺R^{'}₃, -N⁺R₃,-P(O)_{z}Z₂, -NR-COZ, -N(COR^{'})₂, -NR-CSZ, -NR-C(NR)NR₂, -CSZ, -O-CSZ,-SO_{y}Z, -O-SO_{y}Z, -NR-SO₂R^{'}; wherein z is 0 or 1; wherein y is 0, 1 or 2; wherein Z is R, -OR, -NR₂, and -NHR wherein R is independently selected from hydrocarbon groups in branched, linear, cyclic, heterocyclic, aromatic or heteroaromatic configuration having from 1 to 20 carbon atoms; R is independently selected from hydrocarbon groups in branched, linear, cyclic, heterocyclic, aromatic or heteroaromatic configuration having from 1 to 20 carbon atoms; if at least two R or R' groups are present in the functional group then these groups can be connected whereby one R or R' group is a direct bond and the other is a hydrocarbon group in branched, linear, cyclic, heterocyclic, aromatic or heteroaromatic configuration having from 1 to 20 carbon atoms, if R and R' are connected to different atoms, or 2 to 20 carbon atoms, if R and R' are connected to the same atom; wherein x is 0-30.

16. The method in accordance with Claim 15 wherein: n is a selected integer from 1 to 5000;
R¹ and R² are independently selected from: hydrocarbon groups in branched, linear, cyclic, aromatic, heterocyclic or heteroaromatic configuration having from 1 to 10 carbon atoms; R³ is selected from hydrocarbon groups in branched, linear, cyclic, heterocyclic configuration having from 1 to 10000 carbon atoms; when n = 1, R³ can be Y-B[-O-A]ₓ- wherein x is 0-20; wherein A is selected from linear and branched hydrocarbons having from 2 to 6 carbon atoms and B is selected from hydrocarbon groups in branched, linear, cyclic, heterocyclic, aromatic or heteroaromatic configuration having from 1 to 50 carbon atoms; Y is selected from hydrocarbon groups in branched, linear, cyclic, heterocyclic, aromatic or heteroaromatic configuration having from 1 to 50 carbon atoms; wherein Y can represent: -COZ, -OR, -NR₂, -Cl, -Br, -I, -O-SO_{y}Z, -N(COR^{'})₂; wherein y is 0, 1 or 2; wherein Z is R, -OR, -NR₂, and -NHR wherein R is independently selected from hydrocarbon groups in branched, linear, cyclic, heterocyclic, aromatic or heteroaromatic configuration having from 1 to 10 carbon atoms, R is independently selected from hydrocarbon groups in branched, linear, cyclic, heterocyclic, aromatic or heteroaromatic configuration having from 1 to 10 carbon atoms; if at least two R or R' groups are present in the functional group then these can be connected whereby one R or R' group is a direct bond and the other is a hydrocarbon group in branched, linear, cyclic, heterocyclic, aromatic or heteroaromatic configuration having from 1 to 10 carbon atoms, if R and R' are connected to different atoms, or 2 to 10 carbon atoms, if R and R' are connected to the same atom; B can also be a direct bond when Y is a hydrocarbon group in branched, linear, cyclic, heterocyclic, aromatic or heteroaromatic configuration having from 1 to 50 carbon atoms; when n is 1, R³ can be connected to R¹ and be a direct bond, while R¹ is C₁₋₈ alkylene group in linear configuration;
when m is 1, R¹ and R² can also be connected, with R² being a direct bond and R¹ being a C₂₋₈ linear alkylene group.

17. The method in accordance with Claim 14 wherein the carboxylic acid is a homogeneous carboxylic acid having the formula:
(R**-(CO₂H)ₓ)
wherein R** can be selected from C₁₋₂₄ hydrocarbon groups of linear, branched, cyclic or polycyclic configuration, optionally substituted by F and/or CF₃ groups, x is 1 to 4; C₆₋₁₄ aromatic or alkyl aromatic groups wherein the alkyl group can be C₆₋₂₀ where x is 1 to 3 for monoaromatic systems and 1 to 4 for diaromatic; diphenylether or diphenylmethane where x is 1 to 2; C₆₋₂₀ alkyl diphenylmethane where x is 1 to 2; and C₆₋₂₀ alkyl diphenylether where x is 1 to 2.

18. The method in accordance with Claim 11 wherein the adjuvant is a homogeneous Lewis acid:
- having the formula: MXₙ, wherein M represents a transition metal or main group element; X an anion of an acid or acid derivative and n is equal to the oxidation state of M.
- discrete complexes of MXₙ
- complexes obtained by combination of MXₙ with a coordinating ligand
- compounds containing main group elements, in which the main group element represents the Lewis acid site
- organometallic species.

19. The method in accordance with Claim 11 wherein the Broensted acid is homogenous and represented by an inorganic acid selected from: H₃PO₃, H₃PO₄, polyphosphoric acid, metaphosphoric acid and phosphonic acid derivatives R'P(O)(OH)₂.

20. The method in accordance with Claim 11 wherein the Broensted acid is heterogeneous and is represented by an inorganic acid selected from: amorphous silica-alumina; smectites; inorganic or organic acid treated clays; pillared clays; zeolites; and metal oxides ZrO₂-TiO₂, TiO₂-SiO₂; ZrO₂-SiO₂ in 1 : 1 molar combinations and resin bound phosphonic acids.

21. The method in accordance with any one of claims 1 to 20 wherein a solvent is present selected from: fluorinated and chlorinated hydrocarbons; aliphatic hydrocarbons; ethers; aromatic solvents; organic acetates; organic nitriles; silicon fluids; and ionic liquids.

22. The method in accordance with Claim 21 wherein the solvent is selected from: sulfolane; anisole; fluorobenzene; chlorobenzene; tetrachloroethane; tetrachloroethylene; dichloroethane; dichloromethane; diglyme; glyme; diphenyloxide; polyalkylene glycol derivatives with capped OH groups such as OR*** where R*** is a lower alkyl or acyl group; hexane; heptane; cyclohexane; dibutyl ether; diethyl ether; diisopropyl ether; dipentylether; butylmethylether; tetrahydrofuran; dioxane; tetrahydropyran; cyclopentylmethylether; toluene; benzene; xylene; ethylacetate; acetonitrile; benzonitrile; polymethylphenyl siloxane; 1-n-butyl-imidazolium trifluoromethanesulfonate, and 1-ethyl-3-methyl-1,3-imidazolium bis(trifluoromethanesulfonyl)imide.

23. The method in accordance with Claim 21 or 22 wherein the number of equivalents of α-oxy carboxylic acid functions in the compound containing an α-oxy carboxylic acid group to the number of moles of solvent are of from 1 : 0.1 to 1 : 100.

24. The method in accordance with Claim 11 wherein the Lewis acid is heterogeneous and is represented by discretionary subclasses created by interaction/bonding of homogeneous Lewis acid with polymeric organic or inorganic backbones.

25. The method in accordance with any one of Claims 1 to 24, wherein the compound containing an α-oxy carboxylic acid group is selected from:
glycolic acid;
diglycolic acid;
methoxyacetic acid;
3,6,9-trioxadecanoic acid;
5-chloro-3-oxapentanoic acid;
5-amino-3-oxapentanoic acid;
2-tetrahydrofuroic acid;
2-methoxy-butane-1,4-dioic acid.

26. The method in accordance with any one of Claims 1 to 25 wherein the gaseous CO liberated by the formation of the compound containing an α-oxy phosphorus group is collected.

27. The method in accordance with any one of Claims 11 to 20 or 24 wherein the equivalent ratio of adjuvants selected from Broensted and Lewis acids to α-oxy carboxylic acid functions in the compound containing an α-oxy carboxylic acid group is in the range of from 0.01 : 1 to 20 : 1.

## Patentansprüche

1. Verfahren zur Herstellung von Verbindungen enthaltend eine α-Oxyphosphorgruppe ausgewählt aus den Formeln:
R³[-O-C(R¹)(R²)ₘ(P()R^{a}R^{b})₂₋ₘ]ₙ -III-
R³[-C(OR¹)(R²)ₘ(P(O)R^{a}R^{b})₂₋ₘ]ₙ -IV-
die durch Umsetzung einer Verbindung enthaltend eine α-Oxycarbonsäuregruppe mit der Formel ausgewählt aus:
R³[-O-C(R)(R²)ₘ(COOM^{'})₂₋ₘ]ₙ -V-
R³[-C(OR¹)(R²)ₘ(COOM^{'})₂₋ₘ]ₙ -VI-
erhalten wird,
wobei R^{a} und R^{b} unabhängig ausgewählt sind aus: Cl; Br; einer C₁₋₂₀-Kohlenwasserstoffgruppe in verzweigter, linearer, zyklischer, aromatischer, heterozyklischer oder heteroaromatischer Konfiguration; einer Silylgruppe unabhängig substituiert durch C₁₋₂₀-Kohlenwasserstoffgruppen in verzweigter, linearer, zyklischer, aromatischer, heterozyklischer oder heteroaromatischer Konfiguration; OR" oder N(R"')₂; wobei R" ausgewählt sein kann aus einer C₁₋₂₀-Kohlenwasserstoffgruppe in verzweigter, linearer, zyklischer, aromatischer, heterozyklischer oder heteroaromatischer Konfiguration oder einer Silylgruppe unabhängig substituiert durch C₁₋₂₀-Kohlenwasserstoffgruppen in verzweigter, linearer, zyklischer, aromatischer, heterozyklischer oder heteroaromatischer Konfiguration, wobei R'" unabhängig ausgewählt sein kann aus H, einer C₁₋₂₀-Kohlenwasserstoffgruppe in verzweigter, linearer, zyklischer, aromatischer, heterozyklischer oder heteroaromatischer Konfiguration, oder einer Silylgruppe unabhängig substituiert durch C₁₋₂₀-Kohlenwasserstoffgruppen in verzweigter, linearer, zyklischer, aromatischer, heterozyklischer oder heteroaromatischer Konfiguration; falls R^{a} oder R^{b} eine N(R"')₂-Gruppe ist, können die zwei R"'-Gruppen der N(R"')₂-Gruppe mit einer R"'-Gruppe verknüpft sein, die eine C₂₋₂₀-Kohlenwasserstoffgruppe in verzweigter, linearer, zyklischer, aromatischer, heterozyklischer oder heteroaromatischer Konfiguration ist, und die andere R'" ist eine direkte Bindung; R^{a} und R^{b} können verbunden sein, dann ist R^{a} eine C₂₋₂₀-Kohlenwasserstoffgruppe in verzweigter, linearer, zyklischer, aromatischer, heterozyklischer oder heteroaromatischer Konfiguration und R^{b} ist eine direkte Bindung; falls R^{a} und R^{b} OR"-Gruppen sind, dann kann R" der ersten OR"-Gruppe eine C₁₋₂₀-Kohlenwasserstoffgruppe in verzweigter, linearer, zyklischer, aromatischer, heterozyklischer oder heteroaromatischer Konfiguration sein und die R" der zweiten OR"-Gruppe eine direkte Bindung sein; wenn R^{a} und R^{b} N(R"')₂-Gruppen sind, dann kann eine R"'-Gruppe der ersten N(R"')₂-Gruppe eine C₁₋₂₀-Kohlenwasserstoffgruppe in verzweigter, linearer, zyklischer, aromatischer, heterozyklischer oder heteroaromatischer Konfiguration sein und eine R'" der zweiten N(R"')₂-Gruppe ist eine direkte Bindung zu dieser R"'-Gruppe der ersten N(R"')₂-Gruppe; wobei R^{b} E sein kann, und E ist eine C₁₋₂₀-Kohlenwasserstoffgruppe in verzweigter, linearer, zyklischer, aromatischer, heterozyklischer oder heteroaromatischer Konfiguration; m kann 0 oder 1 sein; n ist eine ausgewählte ganze Zahl von 1-100000; M' ist dargestellt durch H oder Alkali, Erdalkali, Ammonium oder protenierten Aminspezies;
R¹ und R² sind unabhängig ausgewählt aus: H, Kohlenwasserstoffgruppen in verzweigter, linearer, zyklischer, aromatischer, heterozyklischer oder heteroaromatischer Konfiguration mit 1 bis 100 Kohlenstoffatomen; wenn R¹ in den Formeln -IV- und -VI- eine aromatische oder heteroaromatische Gruppe enthält, dann müssen mindestens zwei Alkylenkohlenstoffatome zwischen der aromatischen oder heteroaromatischen Gruppe und dem Sauerstoffatom sein;
R³ ist ausgewählt aus Kohlenwasserstoffgruppen in verzweigter, linearer, zyklischer oder heterozyklischer Konfiguration mit 1 bis 200000 Kohlenstoffatomen, wobei [-O-C(R¹)(R²)ₘ(COOM')_{2-M}] in Formel -V- und [-C(OR¹)(R²)ₘ(COOM')₂₋ₘ] in Formel -VI- auf der Kohlenstoffkette von R³ durch Mono- oder Disubstitution an den individuellen R³-Kohlenstoffatomen gleichmäßig, beliebig oder in abwechselnder Weise verteilt sein oder Kombinationen davon mit der Maßgabe, dass n eine ganze Zahl ist, die gleich oder kleiner als 2-mal die Anzahl der Kohlenstoffatome in R³ ist; wenn n = 1, kann R³ H oder y-B[-O-A]ₓ sein, wobei x 0-50 ist; wobei A ausgewählt ist aus linearen oder verzweigten Kohlenwasserstoffen mit 2 bis 100 Kohlenstoffatomen und B ist ausgewählt aus Kohlenwasserstoffgruppen in verzweigter, linearer, zyklischer, heterozyklischer, aromatischer oder heteroaromatischer Konfiguration mit 1 bis 100 Kohlenstoffatomen; Y ist ausgewählt aus Kohlenwasserstoffgruppen in verzweigter, linearer, zyklischer, heterozyklischer, aromatischer oder heteroaromatischer Konfiguration mit 1 bis 100 Kohlenstoffatomen; wenn Y eine aromatische oder heteroaromatische Gruppe ist und x ist 0, dann muss B mindestens 2 Alyklenkohlenstoffatome zwischen der heteroaromatischen oder aromatischen Gruppe und dem direkt verbundenen Sauerstoffatom umfassen; wobei Y dargestellt sein kann durch: H, einer unsubstituierten oder substituierten Doppelbindung, einer unsubstituierten oder substituierten Dreifachbindung, -COZ, -O-COZ, -OR, -NR₂, -SiR₃, -Si(OR^{'})₃, -B(OR^{'})₂, -P⁺R^{'}₃, -N⁺R₃, -CN, Halogen, -P(O)_{z}Z₂, -NR-COZ, -N(COR^{'})₂, -NR-CSZ, -NR-C(NR)NR₂, -CSZ, -O-CSZ, -NR-SO₂R^{'}, -SO_{y}Z, -O-SO_{y}Z; wobei z 0 oder 1 ist; wobei y 0, 1 oder 2 ist; wobei Z H, R, -OR, -NH₂, -NR₂, und -NHR ist, wobei R unabhängig ausgewählt ist aus H, Kohlenwasserstoffgruppen in verzweigter, linearer, zyklischer, heterozyklischer, aromatischer oder heteroaromatischer Konfiguration mit 1 bis 100 Kohlenstoffatomen; R' ist unabhängig ausgewählt aus Kohlenwasserstoffgruppen in verzweigter, linearer, zyklischer, heterozyklischer, aromatischer oder heteroaromatischer Konfiguration mit 1 bis 100 Kohlenstoffatomen; falls mindestens zwei R- oder R'-Gruppen in der funktionellen Gruppe vorhanden sind, dann können diese Gruppen verbunden sein, wobei eine R- oder R'-Gruppe eine direkte Bindung ist und die andere eine Kohlenwasserstoffgruppe in verzweigter, linearer, zyklischer, heterozyklischer, aromatischer oder heteroaromatischer Konfiguration mit 1 bis 100 Kohlenstoffatomen ist, falls R und R' an zwei verschiedene Atome gebunden sind, oder 2 bis 100 Kohlenstoffatomen, falls R und R' an dasselbe Atom gebunden sind; B kann auch eine direkte Bindung sein wenn Y H oder eine Kohlenwasserstoffgruppe in verzweigter, linearer, zyklischer, heterozyklischer, aromatischer oder heteroaromatischer Konfiguration mit 1 bis 100 Kohlenstoffatomen ist;
wenn n 1 ist, kann R³ an R¹ gebunden sein und eine direkte Bindung sein, während R¹ C₁₋₁₀-Alkylengruppe in linearer Konfiguration ist;
wenn m 1 ist, können R¹ und R² verbunden sein, mit R² als eine direkte Bindung und R¹ eine C₂₋₁₂-Iineare Alkylengruppe;
und eine P-X-Komponente mit mindestens einer P-X-Bindung, wobei das Phosphoratom der P-X-Bindung den Oxidationszustand +3 hat, wobei X Cl oder Br ist, durch Zugabe der P-X-Komponente zu der Verbindung enthaltend eine α-Oxicarbonsäuregruppe, oder umgekehrt, in einem äquivalenten Verhältnis von α-Oxicarbonsäurefunktionen in der Verbindung enthaltend eine α-Oxicarbonsäuregruppe: P-X-Bindung in der P-X-Komponente von 1:3 bis 3:1, ggf. gefolgt von Zugabe eines Quenchmittels nach Abschluss der Reaktion der P-X-Komponente mit der Verbindung enthaltend eine α-Oxicarbonsäuregruppe oder umgekehrt durch Zugabe des primären Reaktionsprodukts der Reaktion der P-X-Komponente mit der Verbindung enthaltend eine α-Oxicarbonsäuregruppe zu dem Quenchmittel und Gewinnung des gebildeten Produkts.

2. Verfahren gemäß Anspruch 1, wobei die P-X-Komponente ausgewählt ist aus den folgenden Verbindungen:
R^{a}R^{b}PX or R^{a}(X)P-E-P(X)R^{a}
wobei X ausgewählt ist aus Cl oder Br.

3. Verfahren gemäß irgendeinem der Ansprüche 1 bis 2, wobei das Produkt, das durch die Reaktion der Verbindung enthaltend eine α-Oxicarbonsäuregruppe mit einer P-X-Komponente, gebildet wurde weiter mit einem Quenchmittel reagiert, falls der dritte und/oder vierte Substituent von P¹ in Formel -I- oder R^{a} und/oder R^{b} in Formeln -III- oder -IV- Cl oder Br sind, mit dem Quenchmittel ausgewählt aus der Gruppe von:
- H₂O, M¹(OH)ₘ₁, R^{c}-OH, (R^{c}-O)ₘ₁M², R^{c}[-O-Z₁]ₘ₃-OH, (R^{c}[-O-Z₁]ₘ₃-O)ₘ₁M²;
- H₂S, R^{c}-SH, (R^{c}-S)ₘ₁M²;
- NH₃, NH₃, M²(NH₂)ₘ₁, R^{c}NH₂, R^{c}R^{d}NH, (R^{c}NH)ₘ₁M², (R^{c}R^{d}N)ₘ₁M², R^{c}[-O-Z₁]ₘ₃-NH₂, (R^{c}[-O-Z-₁]ₘ₃-NH)ₘ₁M², R^{c}[-O-Z₁]ₘ₃-NH-[Z₂-O-]ₘ₄-R^{d}, (R^{c}[-O-Z₁]ₘ₃-N-[Z₂-O-]ₘ₄-R^{d})ₘ₁M²;
- H₂N-C(O)R^{c}, R^{c}NH-C(O)R^{d}, M²(N(H)-C(O)R^{c})ₘ₁, M²(N(R^{c})-C(O)R^{d})ₘ₁;
- R^{c}CO₂H, (R^{c}CO₂)ₘ₁M¹;
- R^{c}COSH, (R^{c}COS)ₘ₁M¹;
- R^{c}CS₂H, (R^{c}CS₂)ₘ₁M¹;
- R^{e}Li, R^{e}MgX', R^{e}₂Mg, R^{e}ZnX', R^{e}₂Zn, R^{e}Cu, R^{e}Cu + LiCl, R^{e}Cu + LiCN, R^{e}Cu + MgCl₂, R^{e}Cu + ZnCl₂;
- difunktionelle Verbindungen enthaltend funktionelle Gruppen ausgewählt aus OH, NH₂, NHR, COOH oder SH getrennt durch einen Platzhalter einschließlich:
o HO-Y'-OH, H[-O-Z₁]ₘ₃-OH;
o H₂N-Y'-NH₂, R^{c}HN-Y'-NH₂, R^{c}HN-Y'-NHR^{d}, H₂N-Z₁[-O-Z₂]ₘ₃-NH₂;
o H₂N-Y'-OH, R^{c}HN-Y'-OH;
o H₂N-Y'-CO₂H, R^{c}HN-Y'-CO₂H;
o HO-Y'-CO₂H;
o HS-Y'-CO₂H;
o HS-Y'-SH;
- polyfunktionelle Verbindungen mit einer einzelnen funktionellen Gruppe oder verschiedenen funktionellen Gruppen ausgewählt aus OH, NH₂, NHR, COOH oder SH einschließlich:
o Polyole;
o Monomere oder polymere Aminozucker;
o Polymere mit Hydroxylfunktionen;
o Polymere mit Aminfunktionen;
wobei M¹ Alkali, Erdalkali oder Zn sein kann; wobei M² Li, Na, K, Mg, Zn sein kann; wobei X' Cl, Br, I sein kann;
wobei m1 1 oder 2 ist, abhängig von der Valenz des Metalls, für Monokationen ist m1 1 und für Dikationen ist m1 2; wobei m3 und m4 unabhängig ausgewählt sein können aus 1 bis 100;
wobei R^{c} und R^{d} ausgewählt sein können aus einer C₁₋₂₀-Kohlenwasserstoffgruppe in verzweigter, linearer, zyklischer, aromatischer, heterozyklischer oder heteroaromatischer Konfiguration, oder einer Silylgruppe unabhängig substituiert durch C₁₋₂₀-Kohlenwasserstoffgruppen in verzweigter, linearer, zyklischer, aromatischer, heterozyklischer oder heteroaromatischer Konfiguration, einer Mono- oder Polyhalogen substituierten (F, Cl, Br, I oder Mischungen davon) C₁₋₂₀-Kohlenwasserstoffgruppe in verzweigter, linearer, zyklischer, aromatischer, heterozyklischer oder heteroaromatischer Konfiguration; wobei R^{e} ausgewählt sein kann aus einer C₁₋₂₀-Kohelnwasserstoffgruppe in verzweigter, linearer, zyklischer, aromatischer, heterozyklischer oder heteroaromatischer Konfiguration, substituierten Vinylgruppen, substituierten Allylgruppen;
wobei Y' ausgewählt sein kann aus einer C₁₋₂₀-Kohlenwasserstoffgruppe in verzweigter, linearer, zyklischer, aromatischer, heterozyklischer oder heteroaromatischer Konfiguration; wobei Z₁ und Z₂ unabhängig ausgewählt sein können aus linearen und verzweigten Kohlenwasserstoffen mit 2 bis 20 Kohlenstoffatomen.

4. Verfahren gemäß irgendeinem der Ansprüche 1 bis 3, wobei die P-X-Komponente ausgewählt ist aus:
- PCl₃;
- PBr₃;
- Cl₂PCH₂CH₂PCl₂;
- R^{a}R^{b}PCl, wobei R^{a} und R^{b} unabhängig ausgewählt sind aus: einer C₁₋₁₀-Kohlenwasserstoffgruppe in verzweigter, linearer, zyklischer, aromatischer, heterozyklischer oder heteroaromatischer Konfiguration; oder OR", wobei R" ausgewählt sein kann aus einer C₁₋₁₀-Kohlenwasserstoffgruppe in verzweigter, linearer, zyklischer, aromatischer, heterozyklischer oder heteroaromatischer Konfiguration; R^{a} und R^{b} können verbunden sein, dann ist R^{a} eine C₂₋₁₀-Kohlenwasserstoffgruppe in verzweigter, linearer, zyklischer, aromatischer, heterozyklischer oder heteroaromatischer Konfiguration, und R^{b} ist eine direkte Bindung; falls R^{a} und R^{b} OR"-Gruppen sind, dann kann R" der ersten OR"-Gruppe eine C₁₋₁₀-Kohlenwasserstoffgruppe in verzweigter, linearer, zyklischer, aromatischer, heterozyklischer oder heteroaromatischer Konfiguration sein und das R" der zweiten OR"-Gruppe kann eine direkte Bindung sein.

5. Verfahren gemäß irgendeinem der Ansprüche 1 bis 4, wobei das Äquivalenzverhältnis der α-Oxicarbonsäurefunktionen in der Verbindung enthaltend eine α-Oxicarbonsäuregruppe : P-X-Bindungen in der P-X-Komponente von 1:2 zu 2:1 ist.

6. Verfahren gemäß irgendeinem der Ansprüche 1 bis 5, wobei das Quenchmittel ausgewählt ist aus: Wasser, Lithiumhydroxid, Natriumhydroxid, Kaliumhydroxid, Magnesiumhydroxid, Methanol, Ethanol, n-Propanol, iso-Propanol, n-Butanol, Phenol, 2,2,2-Trifluorethanol, Trimethylsilanol, Allylalkohol, Natriumethanolat, Kalium-tert.-Butanolat, Ammoniak, Lithiumamid, Natiriumamid, Dimethylamin, Diethylamin, di-n-Propylamin, Anilin, n-Propylamin, iso-Propylamin, n-Butylamin, sec. Butylamin, tert. Butylamin, Benzylamin, Morpholin, Piperidin, Essigsäure, Benzoesäure, Propansäure, n-Butansäure, n-Pentansäure, Methyllithium, tert. Butyllithium, Phenyllithium, Ethylmagnesiumchlorid, Ethylmagnesiumbromid, Phenylmagnesiumchlorid, Phenylmagnesiumbromid, Vinylmagnesiumchlorid, Vinylmagnesiumbromid, Allylmagnesiumchlorid, 1,2-Dihydroxybenzol, Ethylenglycol, 1,3-Propandiol, 2,2-Dimenthyl-1,3-propandiol, Pinacol, 2,3-Butandiol, 1,2-Diaminobenzol, N,N'-Dimethylethylendiamin, Ethanolamin, 2-Methylaminethanol, Glycin, Alanin, Phenylalanin, Arginin, Citrulin, Glutaminsäure, Histidin, Isoleucin, Leucin, Valin, Lysin, Ornithin, Tryptophan, Tyrosin, Threonin, Prolin, Glycolsäure, Salicylsäure, Pentaerythritol, Glucosamin, Galactosamin, Chitosan, Chitin, Poly(vinylalkohol) mit M_{w} von 5000 bis 500000, teilweise hydrolysierten Poyl(vinylacetat) mit einem M_{w} von 5000 bis 500000, Poly(vinylamin) mit einem M_{w} von 1000 bis 250000, teilweise hydrolysiertes Poly(vinylacetamid) mit einem M_{w} von 1000 bis 250000, Poly(allylamin) mit einem M_{w} von 1000 bis 250000, linearem oder verzweigtem Poly(ethylenimin) mit einem M_{w} von 1000 zu 250000, 1,2-Ethandithiol, 1,3-Propandithiol, Jeffamin M-600, Jeffamin M-1000, Jeffamin M-2005, Jeffamin M-2070, Jeffamin D-230, Jeffamin D-400, Jeffamin D-2000, Jeffamin D-4000, Jeffamin HK-511, Jeffamin ED-600, Jeffamin Jeffamin ED-900, Jeffamin ED-2003, Jeffamin EDR-148, Jeffamin EDR-167, Zellulose, Stärke, Fructan, Galactomannan, Agar und Arabinogalacton.

7. Verfahren gemäß irgendeinem der Ansprüche 1 bis 6, wobei das Äquivalenzverhältnis von unreagierten P-X-Bindungen in dem primären Reaktionsprodukt der Verbindung enthaltend eine α-Oxicarbonsäuregruppe und der P-X-Komponente:reaktive Funktionen in dem Quenchmittel im Bereich von 1:0,1 zu 1:10 ist.

8. Verfahren gemäß irgendeinem der Ansprüche 1 bis 7, wobei die verbleibenden P-Cl- oder P-Br-Bindungen des primären Reaktionsprodukts der Verbindung enthaltend eine α-Oxicarbonsäuregruppe mit der P-X-Komponente in Gegenwart einer Base ausgewählt aus tertiären Aminen, N-heteroaromatischen Verbindungen, harzgebundenen N-heteroaromatischen Verbindungen, harzgebundenen tertiären Aminen, wobei pro Äquivalent von verbleibenden P-Cl- oder P-Br-Bindung mindestens 1 Äquivalent von Base benötigt ist, gequencht wird.

9. Verfahren nach Anspruch 8, wobei ein Amin das Quenchmittel ist und das Amin in einer Menge von mindestens 2 Äquivalenten pro verbleibender P-Cl- oder P-Br-Bindung verwendet wird.

10. Verfahren nach Anspruch 8, wobei die Base ausgewählt ist aus Triethylamin, Pyridin, 4-(Dimethylamin)pyridin, 2,6-Lutidin, 2-Picolin, 1,4-Diazabicyclo[2.2.2]octan, 1,8-Diazabicyclo[5.4.0]undec-7-en, 1,8-Diazabicyclo[5.4.0]undec-7-en, Poly(4-Vinylpyridin), Poly(2-Vinylpyridin).

11. Verfahren gemäß irgendeinem der Ansprüche 1 bis 10, wobei das Verfahren in Gegenwart eines Hilfsstoffs ausgewählt aus der Gruppe von: Lewissäuren, Broenstedsäuren; und Kombinationen davon, durchgeführt wird.

12. Verfahren gemäß Anspruch 11, wobei die Broenstedsäure eine homogene Sulfonsäure mit der Formel
(R*-(SO₃H)ₓ)
ist wobei R* ausgewählt ist aus:
- C₁₋₂₄-Kohlenwasserstoffgruppen von linearer, verzweigter, zyklischer oder polyzyklischer Konfiguration, ggf. substituiert mit F- und/oder CF₃-Gruppen, wobei x 1 bis 4 ist;
- C₆₋₁₄-aromatischen oder alkylaromatischen Gruppen, wobei die Alkylgruppe C₆₋₂₀ sein kann, wobei x 1 bis 3 für monoaromatische Systeme und 1 bis 4 für diaromatische und höhere Systeme ist;
- Diphenylether oder Diphenylmethan wobei x 1 oder 2 ist;
- C₆₋₂₀-Alkyldiphenylmethan wobei x 1 oder 2 ist;
- C₆₋₂₀-Alkyldiphenylether wobei x 1 oder 2 ist.

13. Verfahren gemäß Anspruch 11, wobei die Broenstedsäure eine heterogene Sulfonsäure ist, und ausgewählt ist aus:
- Sulfonsäuren aufgepfropft auf Harze umfassend Copolymere von Styrol, Ethylvinyl, Benzol und Divinylbenzol, derart funktionalisiert, dass SO₃H-Gruppen auf die aromatischen Gruppen pfropfen;
- Perfluorinierte Harze, die Sulfonsäuregruppen tragen;
- Sulfonsäuren, die auf Feststoffe mit einem freien Elektronenpaar aufgebracht sind; und
- Polymere und anorganische Feststoffe, die durch chemisches Aufpfropfen funktionalisiert sind und geeignet sind Sulfonsäuren zu bilden.

14. Verfahren gemäß Anspruch 11, wobei der Hilfsstoff eine Carbonsäure ausgewählt aus homogenen und heterogenen Carbonsäuren ist.

15. Verfahren gemäß Anspruch 1, wobei die Verbindung enthaltend eine α-Oxycarbonsäuregruppe ausgewählt ist aus Spezies -V- oder -VI-, wobei die Symbole die folgenden Bedeutungen haben:
n ist eine ausgewählte ganze Zahl von 1 bis 15000;
R¹ und R² sind unabhängig ausgewählt aus: Kohlenwasserstoffgruppen mit 1 bis 20 Kohlenstoffatomen;
R³ ist ausgewählt aus Kohlenwasserstoffgruppen in verzweigter, linearer, zyklischer oder heterozyklischer Konfiguration mit 1 bis 30000 Kohlenstoffatomen; wenn n = 1, kann R³ Y-B[-O-A]ₓ- sein, wobei A ausgewählt ist aus linearen und verzweigten Kohlenwasserstoffen mit vorzugsweise von 2 bis 10 Kohlenstoffatomen und B ist ausgewählt aus Kohlenwasserstoffgruppen in verzweigter, linearer, zyklischer, heterozyklischer, aromatischer oder heteroaromatischer Konfiguration mit 1 bis 50 Kohlenstoffatomen; wobei Y darstellen kann: -COZ, -O-COZ, -OR, -NR₂, -SiR₃, -Si(OR')₃, -B(OR')₂, -P⁺R'₃, -N⁺R₃, -P(O)_{z}Z₂, -NR-COZ, -N(COR')₂, -NR-CSZ, -NR-C(NR)NR₂, -CSZ, -O-CSZ, -SO_{y}Z, -O-SOyZ, -NR-SO₂R, wobei z 0 oder 1 ist; wobei y 0, 1 oder 2 ist; wobei Z R, -OR, -NR₂ und -NHR ist, wobei R unabhängig ausgewählt ist aus Kohlenwasserstoffgruppen in verzweigter, linearer, zyklischer, heterozyklischer, aromatischer oder heteroaromatischer Konfiguration mit 1 bis 20 Kohlenstoffatomen; R' ist unabhängig ausgewählt aus Kohlenwasserstoffgruppen in verzweigter, linearer, zyklischer, heterozyklischer, aromatischer oder heteroaromatischer Konfiguration mit 1 bis 20 Kohlenstoffatomen; falls mindestens 2 R- oder R'-Gruppen in der funktionellen Gruppe vorhanden sind, dann können diese Gruppen verbunden sein, wobei eine R- oder R'-Gruppe eine direkte Bindung ist und die andere eine Kohlenwasserstoffgruppe in verzweigter, linearer, zyklischer, heterozyklischer, aromatischer oder heteroaromatischer Konfiguration mit 1 bis 20 Kohlenstoffatomen ist, falls R und R' an verschiedene Atome gebunden sind, oder 2 bis 20 Kohlenstoffatome, falls R und R' an dasselbe Atom gebunden sind; wobei x 0-30 ist.

16. Verfahren gemäß Anspruch 15, wobei: n ist eine ausgewählte ganze Zahl von 1 bis 5000;
R¹ und R² sind unabhängig ausgewählt aus: Kohlenwasserstoffgruppen in verzweigter, linearer, zyklischer, aromatischer, heterozyklischer oder heteroaromatischer Konfiguration mit 1 bis 10 Kohlenstoffatomen; R³ ist ausgewählt aus Kohlenwasserstoffgruppen in verzweigter, linearer, zyklischer, heterozyklischer Konfiguration mit 1 bis 10000 Kohlenstoffatomen;
wenn n = 1, kann R³ Y-B[-O-A]ₓ- sein, wobei x 0-20 ist; wobei A ausgewählt ist aus linearen und verzweigten Kohlenwasserstoffen mit 2 bis 6 Kohlenstoffatomen und B ausgewählt ist aus Kohlenwasserstoffgruppen in verzweigter, linearer, zyklischer, heterozyklischer, aromatischer oder heteroaromatischer Konfiguration mit 1 bis 50 Kohlenstoffatomen; Y ist ausgewählt aus Kohlenwasserstoffgruppen in verzweigter, linearer, zyklischer, heterozyklischer, aromatischer oder heteroaromatischer Konfiguration mit 1 bis 50 Kohlenstoffatomen; wobei Y sein kann: -COZ, -OR, -NR₂, -Cl, -Br, -I, -O-SO_{y}Z, -N(COR')₂; wobei y 0, 1, oder 2 ist; wobei Z R, -OR, -NR₂, und -NHR ist, wobei R unabhängig ausgewählt ist aus Kohlenwasserstoffgruppen in verzweigter, linearer, zyklischer, heterozyklischer, aromatischer oder heteroaromatischer Konfiguration mit 1 bis 10 Kohlenstoffatomen, R' ist unabhängig ausgewählt aus Kohlenwasserstoffgruppen in verzweigter, linearer, zyklischer, heterozyklischer, aromatischer oder heteroaromatischer Konfiguration mit 1 bis 10 Kohlenstoffatomen; falls mindestens zwei R- oder R'-Gruppen in der funktionellen Gruppe vorhanden sind, können diese verbunden sein, wobei eine R- oder R'-Gruppe eine direkte Bindung ist und die andere eine Kohlenwasserstoffgruppe in verzweigter, linearer, zyklischer, heterozyklischer, aromatischer oder heteroaromatischer Konfiguration mit 1 bis 10 Kohlenstoffatomen ist, falls R und R' an verschiedene Atome gebunden sind oder 2 bis 10 Kohlenstoffatome, falls R und R' an dasselbe Atom gebunden sind; B kann auch eine direkte Bindung sein, wenn Y eine Kohlenwasserstoffgruppe in verzweigter, linearer, zyklischer, heterozyklischer, aromatischer oder heteroaromatischer Konfiguration mit 1 bis 50 Kohlenstoffatomen ist;
wenn n 1 ist, kann R³ an R¹ gebunden sein und eine direkte Bindung sein, während R¹ eine C₁₋₈-Alkylengruppe in linearer Konfiguration ist;
wenn m 1 ist, können R¹ und R² auch verbunden sein, mit R² als direkte Bindung und R¹ als C₂₋₈-lineare-Alkylengruppe.

17. Verfahren gemäß Anspruch 14, wobei die Carbonsäure eine homogene Carbonsäure mit der Formel:
(R**-(CO₂H)ₓ)
ist,
wobei R** ausgewählt sein kann aus C₁₋₂₄-Kohlenwasserstoffgruppen von linearer, verzweigter, zyklischer oder polyzyklischer Konfiguration, ggf. substituiert durch F- und/oder CF₃-Gruppen, x ist 1 bis 4; C₆₋₁₄ aromatische oder alkylaromatische Gruppen, wobei die Alkylgruppe C₆₋₂₀ sein kann, wobei x 1 bis 3 für monoaromatische Systeme und 1 bis 4 für diaromatische ist; Diphenylether oder Diphenylmethan, wobei x 1 bis 2 ist; C₆₋₂₀-Alkyldiphenylmethan, wobei x 1 bis 2 ist; und C₆₋₂₀-Alkyldiphenylether, wobei x 1 bis 2 ist.

18. Verfahren gemäß Anspruch 11, wobei der Hilfsstoff eine homogene Lewis-Säure ist:
- mit der Formel: MXₙ, wobei M ein Übergangsmetall oder ein Hauptgruppenelement darstellt; X ein Anion einer Säure oder eines Säurederivats ist und n gleich dem Oxidationszustand von M ist.
- einzelne Komplexe von MXₙ
- Komplexe erhalten durch Kombination von MXₙ mit einem koordinierenden Liganden
- Verbindungen enthaltend Hauptgruppenelemente, in denen das Hauptgruppenelement durch die Lewis-Säurestelle dargestellt ist
- Organometallspezies.

19. Verfahren gemäß Anspruch 11, wobei die Broenstedsäure homogen ist und durch eine anorgansiche Säure dargestellt wird, ausgewählt aus: H₃PO₃, H₃PO₄, Polyphosphorsäure, Metaphosphorsäure und Phosphonsäurederivate R'P(O)(OH)₂.

20. Verfahren gemäß Anspruch 11, wobei die Broenstedsäure heterogen ist und durch eine anorganische Säure dargestellt wird, ausgewählt aus: amorphem Silica-Aluminiumoxid; Smectiten; mit anorganischen oder organischen Säuren behandelten Tonen; Säulentonen (pillared clays), Zeoliten; und Metalloxiden ZrO₂-TiO₂, TiO₂-SiO₂; ZrO₂-SiO₂ in 1:1 molaren Kombinationen und harzgebundenen Phosphonsäuren.

21. Verfahren gemäß irgendeinem der Ansprüche 1 bis 20, wobei ein Lösungsmittel vorhanden ist, ausgewählt aus: fluorinierten und chlorinierten Kohlenwasserstoffen; aliphatischen Kohlenwasserstoffen; Ethern, aromatischen Lösungsmitteln; organischen Acetaten; organischen Nitrilen; Silikonflüssigkeiten; und ionischen Flüssigkeiten.

22. Verfahren gemäß Anspruch 21, wobei das Lösungsmittel ausgewählt ist aus Sulfolan, Ansiol; Fluorbenzol; Chlorbenzol; Tetrachlorethan; Tetrachlorethylen; Dichlorethan; Dichlormethan; Diglyme; Glyme; Diphenyloxid; Polyalkylenglcolderivaten mit gekappten OH-Gruppen wie OR*** wobei R*** eine niedere Alkyl- oder Acylgruppe ist; Hexan; Heptan; Cyclohexan; Dibutylether; Diethylether; Düsopropylether; Dipentylether; Butylmethylether; Tetrahydrofuran; Dioxan; Tetrahydropyran; Cyclopentylmethylether; Toluol; Benzol; Xylol; Ethylacetat; Acetonitril; Benzonitril; Polymethylphenylsiloxan; 1-n-Butyl-imidazoltrifluormethansulfonat und 1-Ethyl-3-methyl-1,3-imidazolbis(trifluormethansulfonyl)imid.

23. Verfahren gemäß Anspruch 21 oder 22, wobei die Zahl der Äquivalenten an α-Oxycarbonsäurefunktionen in der Verbindung enthaltend eine α-Oxycarbonsäuregruppe zur Anzahl der Molen von Lösungsmittel von 1:0,1 bis 1:100 ist.

24. Verfahren gemäß Anspruch 11, wobei die Lewis-Säure heterogen ist und durch einzelne Unterklassen dargestellt ist, die durch Interaktion/Bindung von homogener Lewis-Säure mit polymeren, organischen oder anorganischen Rückgraten (Backbones) gebildet wird.

25. Verfahren gemäß irgendeinem der Ansprüche 1 bis 24, wobei die Verbindung enthaltend eine α-Oxycarbonsäuregruppe ausgewählt ist aus:
Glycolsäure;
Diglycolsäure;
Methoxyessigsäure;
3,6,9-Trioxydecansäure;
5-Chlor-3-oxapentansäure;
5-Amino-3-oxapentansäure;
2-Tetrahydrofuransäure;
2-Methoxybutan-1,4-Dionsäure.

26. Verfahren gemäß irgendeinem der Ansprüche 1-25, wobei das gasförmige CO, das durch die Bildung der Verbindung enthaltend eine α-Oxyphosphorgruppe freigesetzt wird, gesammelt wird.

27. Verfahren gemäß irgendeinem der Ansprüche 11 bis 20 oder 24, wobei das Äquivalenzverhältnis von Hilfsstoffen ausgewählt aus Broensted- und Lewis-Säuren zu α-Oxycarbonsäurefunktionen in der Verbindung enthaltend eine α-Oxycarbonsäuregruppe im Bereich von 0,01:1 bis 20:1 ist.

## Revendications

1. Procédé de fabrication de composés contenant un groupe α-oxy-phosphore choisi parmi les formules :
R³[-O-C(R¹)(R²)ₘ(P(O)R^{a}R^{b})₂₋ₘ]ₙ -III-
R³[-C(OR¹)(R²)ₘ(P(O)R^{a}R^{b})₂₋ₘ]ₙ -IV-
qui est obtenu par réaction d'un composé contenant un groupe acide α-oxy-carboxylique ayant une formule choisie parmi :
R³[-O-C(R¹)(R²)m(COOM')₂₋ₘ]ₙ -V-
R³[-C(OR¹)(R²)ₘ(COOM')₂₋ₘ]ₙ -VI-
où R^{a} et R^{b} sont indépendamment choisis parmi: Cl ; Br ; un groupe hydrocarbure en C₁₋₂₀ dans une configuration ramifiée, linéaire, cyclique, aromatique, hétérocyclique ou hétéroaromatique ; un groupe silyle indépendamment substitué par des groupes hydrocarbures en C₁₋₂₀ dans une configuration ramifiée, linéaire, cyclique, aromatique, hétérocyclique ou hétéroaromatique ; OR" ou N(R'")₂, où R" peut être choisi parmi un groupe hydrocarbure en C₁₋₂₀ dans une configuration ramifiée, linéaire, cyclique, aromatique, hétérocyclique ou hétéroaromatique, ou un groupe silyle indépendamment substitué par des groupes hydrocarbures en C₁₋₂₀ dans une configuration ramifiée, linéaire, cyclique, aromatique, hétérocyclique ou hétéroaromatique, où R'" peut être indépendamment choisi parmi H, un groupe hydrocarbure en C₁₋₂₀ dans une configuration ramifiée, linéaire, cyclique, aromatique, hétérocyclique ou hétéroaromatique, ou un groupe silyle indépendamment substitué par des groupes hydrocarbures en C₁₋₂₀ dans une configuration ramifiée, linéaire, cyclique, aromatique, hétérocyclique ou hétéroaromatique ; si R^{a} ou R^{b} est un groupe N(R"')₂, alors les deux groupes R"' du groupe N(R"')₂ peuvent être reliés conjointement avec un groupe R"' étant un groupe hydrocarbure en C₂₋₂₀ dans une configuration ramifiée, linéaire, cyclique, aromatique, hétérocyclique ou hétéroaromatique et l'autre R"' étant une liaison directe ; R^{a} et R^{b} peuvent être reliés, alors R^{a} est un groupe hydrocarbure en C₂₋₂₀ dans une configuration ramifiée, linéaire, cyclique, aromatique, hétérocyclique ou hétéroaromatique et R^{b} est une liaison directe ; si R^{a} et R^{b} sont des groupes OR", alors R" du premier groupe OR" peut être un groupe hydrocarbure en C₁₋₂₀ dans une configuration ramifiée, linéaire, cyclique, aromatique, hétérocyclique ou hétéroaromatique et le R" du deuxième groupe OR" est une liaison directe ; si R^{a} et R^{b} sont des groupes N(R"')₂, alors un groupe R"' du premier groupe N(R'")₂ peut être un groupe hydrocarbure en C₁₋₂₀ dans une configuration ramifiée, linéaire, cyclique, aromatique, hétérocyclique ou hétéroaromatique et un R'" du deuxième groupe N(R"')₂ est une liaison directe avec ce groupe R'" du premier groupe N(R"')₂ ; où R^{b} peut être E, E étant un groupe hydrocarbure en C₁₋₂₀ dans une configuration ramifiée, linéaire, cyclique, aromatique, hétérocyclique ou hétéroaromatique ; m peut être 0 ou 1 ; n est un entier sélectionné de 1 à 100000 ; M' est représenté par H ou une espèce alcaline, alcalinoterreuse, ammonium ou amine protonée ;
R¹ et R² sont indépendamment choisis parmi : H, des groupes hydrocarbures dans une configuration ramifiée, linéaire, cyclique, aromatique, hétérocyclique ou hétéroaromatique ayant de 1 à 100 atomes de carbone ; lorsque R¹ dans les formules -IV- et -VI- contient un groupe aromatique ou hétéroaromatique, alors il doit y avoir au moins deux atomes de carbone d'alkylène entre le groupe aromatique ou hétéroaromatique et l'atome d'oxygène ;
R³ est choisi parmi des groupes hydrocarbures dans une configuration ramifiée, linéaire, cyclique ou hétérocyclique ayant de 1 à 200000 atomes de carbone, où [-O-C(R¹)(R²)m(COOM')₂₋ₘ] dans la formule -V- et [-C(OR¹)(R²)ₘ(COOM')₂₋ₘ] dans la formule -VI- peuvent être distribués sur la chaîne carbonée de R³ par mono ou di-substitution sur les atomes de carbone R³ individuels, de façons uniforme, aléatoire alternée ou des combinaisons de celles-ci à condition que n soit un entier qui est égal ou inférieur à 2 fois le nombre d'atomes de carbone dans R³ ;
lorsque n = 1, R³ peut être H ou Y-B[-O-A]ₓ- dans lequel x est 0 à 50 ; dans lequel A est choisi parmi des hydrocarbures linéaires et ramifiés ayant de 2 à 100 atomes de carbone et B est choisi parmi des groupes hydrocarbures dans une configuration ramifiée, linéaire, cyclique, hétérocyclique, aromatique ou hétéroaromatique ayant de 1 à 100 atomes de carbone ; Y est choisi parmi des groupes hydrocarbures dans une configuration ramifiée, linéaire, cyclique, hétérocyclique, aromatique ou hétéroaromatique ayant de 1 à 100 atomes de carbone ;
lorsque Y est un groupe aromatique ou hétéroaromatique et x est 0, alors B doit comprendre au moins 2 atomes de carbone d'alkylène entre le groupe hétéroaromatique ou aromatique et l'atome d'oxygène directement lié ; où Y peut représenter : H, une double liaison non substituée ou substituée, une triple liaison non substituée ou substituée, -COZ, -O-COZ, -OR, -NR₂,-SiR'₃, -Si (OR')₃, -B(OR')₂, -P⁺R'₃, -N⁺R₃, -CN, halogène, -P(O)_{z}Z₂, -NR-COZ, -N(COR')₂, -NR-CSZ, -NR-C(NR)NR₂, - CSZ, -O-CSZ, -NR-SO₂R', -SO_{y}Z, -O-SO_{y}Z ; où z est 0 ou 1 ; où y est 0, 1 ou 2 ; où Z est H, R, -OR, -NH₂, -NR₂, et -NHR où R est indépendamment choisi parmi H, des groupes hydrocarbures dans une configuration ramifiée, linéaire, cyclique, hétérocyclique, aromatique ou hétéroaromatique ayant de 1 à 100 atomes de carbone ;
R' est indépendamment choisi parmi des groupes hydrocarbures dans une configuration ramifiée, linéaire, cyclique, hétérocyclique, aromatique ou hétéroaromatique ayant de 1 à 100 atomes de carbone ; si au moins deux groupes R ou R' sont présents dans le groupe fonctionnel, alors ces groupes peuvent être reliés, de sorte qu'un groupe R ou R' soit une liaison directe et l'autre soit un groupe hydrocarbure dans une configuration ramifiée, linéaire, cyclique, hétérocyclique, aromatique ou hétéroaromatique ayant de 1 à 100 atomes de carbone, si R et R' sont liés à différents atomes, ou 2 à 100 atomes de carbone, si R et R' sont liés au même atome ; B peut également être une liaison directe lorsque Y est H ou un groupe hydrocarbure dans une configuration ramifiée, linéaire, cyclique, hétérocyclique, aromatique ou hétéroaromatique ayant de 1 à 100 atomes de carbone ; lorsque n est 1, R³ peut être relié à R¹ et être une liaison directe, tandis que R¹ est un groupe alkylène en C₁₋₁₀ en configuration linéaire ;
lorsque m est 1, R¹ et R² peuvent également être reliés, R² étant une liaison directe et R¹ étant un groupe alkylène linéaire en C₂₋₁₂ ;
et un composant P-X ayant au moins une liaison P-X, de sorte que l'atome de phosphore de la liaison P-X ait l'état d'oxydation +3, X étant Cl ou Br, par ajout du composant P-X au composé contenant un groupe acide α-oxy-carboxylique, ou l'inverse, dans un rapport équivalent de fonctions acide α-oxy-carboxylique dans le composé contenant un groupe acide α-oxy-carboxylique : liaisons P-X dans le composant P-X de de 1 : 3 à 3 : 1, facultativement suivie par l'ajout d'un agent inactivateur une fois que la réaction du composant P-X avec le composé contenant un groupe acide α-oxy-carboxylique ou l'inverse est complète par ajout du produit de réaction primaire de la réaction du composant P-X avec le composé contenant un groupe acide α-oxy-carboxylique à l'agent inactivateur, et la récupération du produit formé.

2. Procédé selon la revendication 1 dans lequel le composant P-X est choisi parmi les composés suivants :
R^{a}R^{b}PX ou R^{a} (X) P-E-P (X) R^{a}
où X est choisi parmi Cl ou Br.

3. Procédé selon l'une quelconque des revendications 1 à 2 dans lequel le produit formé par la réaction du composé contenant un groupe acide α-oxy-carboxylique avec un composant P-X réagit en outre avec un agent inactivateur, si le troisième et/ou quatrième substituant de P¹ dans la formule -I- ou R^{a} et/ou R^{b} dans les formules -III- ou -IV- sont Cl ou Br, l'agent inactivateur étant choisi dans le groupe de :
- H₂O, M¹(OH)ₘ₁, R^{c}-OH, (R^{c}-O)ₘ₁M², R^{c}[-O-Z₁]ₘ]OH, (R^{c}[-O-Z₁]ₘ₃-O)ₘ₁M² ;
- H₂S, R^{c}-SH, (Rc-S)ₘ₁M² ;
- NH₃, NH₃, M²(NH₂)ₘ₁, R^{c}NH₂, R^{c}R^{d}NH, (R^{c}NH)ₘ₁M², (R^{c}R^{d}N)ₘ₁M2, R^{c}[-O-Z₁]ₘ₃-NH2, (R^{c}[-O-Z₁]ₘ₃-NH)ₘ₁M², R^{c}[-O-Z₁]ₘ₃NH-[Z₂-O-]ₘ₄-R^{d}, (R^{c}[-O-Z₁]ₘ₃-N-[Z₂-O-]ₘ₄-R^{d})ₘ₁M² ;
- H₂N-C(O)R^{c}, R^{c}NH-C(O)R^{d}, M²(N(H)-C(O)R^{c})ₘ₁, M²(N(R^{c})-C(O)R^{d})ₘ₁ ;
- R^{c}CO₂H, (R^{c}CO₂)ₘ₁M¹ ;
- R^{c}COSH, (R^{c}COS)ₘ₁M¹ ;
- R^{c}CS₂H, (R^{c}CS₂)ₘ₁M¹ ;
- R^{e}Li, R^{e}MgX', R^{e}₂Mg, R^{e}ZnX', R^{e}₂Zn, R^{e}Cu, R^{e}Cu + LiCl, R^{e}Cu + LiCN, R^{e}Cu + MgCl₂, R^{e}Cu + ZnCl₂ ;
- des composés difonctionnels contenant des groupes fonctionnels choisis parmi OH, NH₂, NHR, COOH ou SH séparés par un espaceur comprenant :
∘ HO-Y'-OH, H[-O-Z₁]ₘ₃-OH ;
∘ H₂N-Y'-NH₂, R^{c}HN-Y'-NH₂, R^{c}HN-Y'-NHR^{d}, H₂N-Z₁[-O-Z₂]ₘ₃-NH₂ ;
∘ H₂N-Y'-OH, R^{c}HN-Y'-OH ;
∘ H₂N-Y'-CO₂H, R^{c}HN-Y'-CO₂H ;
∘ HO-Y'-CO₂H ;
∘ HS-Y'-CO₂H ;
∘ HS-Y'-SH ;
- des composés polyfonctionnels avec un groupe fonctionnel unique ou différent groupes fonctionnels choisis parmi OH, NH₂, NHR, COOH ou SH comprenant :
∘ des polyols ;
∘ des sucres aminés monomères ou polymères ;
∘ des polymères avec des fonctions hydroxyle ;
∘ des polymères avec des fonctions amine ;
où M¹ peut être un métal alcalin, un métal alcalino-terreux ou Zn ; où M² peut être Li, Na, K, Mg, Zn ; où X' peut être Cl, Br, I ;
où m1 est 1 ou 2, suivant la valence du métal, pour des monocations m1 est 1 et pour des dications m1 est 2 ; où m3 et m4 peuvent être indépendamment choisis parmi 1 à 100 ;
où R^{c} et R^{d d} peuvent être choisis parmi un groupe hydrocarbure en C₁₋₂₀ dans une configuration ramifiée, linéaire, cyclique, aromatique, hétérocyclique ou hétéroaromatique, ou un groupe silyle indépendamment substitué par des groupes hydrocarbures en C₁₋₂₀ dans une configuration ramifiée, linéaire, cyclique, aromatique, hétérocyclique ou hétéroaromatique, un groupe hydrocarbure en C₁₋₂₀ mono- ou polysubstitué par halogène (F, Cl, Br, I, ou des mélanges de ceux-ci) dans une configuration ramifiée, linéaire, cyclique, aromatique, hétérocyclique ou hétéroaromatique ; où R^{e} peut être choisi parmi un groupe hydrocarbure en C₁₋₂₀ dans une configuration ramifiée, linéaire, cyclique, aromatique, hétérocyclique ou hétéroaromatique, des groupes vinyle substitués, des groupes allyle substitués ;
où Y' peut être choisi parmi un groupe hydrocarbure en C₁₋₂₀ dans une configuration ramifiée, linéaire, cyclique, aromatique, hétérocyclique ou hétéroaromatique ; où Z₁ et Z₂ peuvent être indépendamment choisis parmi des hydrocarbures linéaires et ramifiés ayant de 2 à 20 atomes de carbone.

4. Procédé selon l'une quelconque des revendications 1 à 3 dans lequel
le composant P-X est choisi parmi :
- PCl₃ ;
- PBr₃ ;
- Cl₂PCH₂CH₂PCl₂ ;
- R^{a}R^{b}PCl, où R^{a} et R^{b} sont indépendamment choisis parmi : un groupe hydrocarbure en C₁₋₁₀ dans une configuration ramifiée, linéaire, cyclique, aromatique, hétérocyclique ou hétéroaromatique ; ou OR", où R" peut être choisi parmi un groupe hydrocarbure en C₁₋₁₀ dans une configuration ramifiée, linéaire, cyclique, aromatique, hétérocyclique ou hétéroaromatique ; R^{a} et R^{b} peuvent être reliés, alors R^{a} est un groupe hydrocarbure en C₂₋₁₀ dans une configuration ramifiée, linéaire, cyclique, aromatique, hétérocyclique ou hétéroaromatique et R^{b} est une liaison directe ; si R^{a} et R^{b} sont des groupes OR", alors R" du premier groupe OR" peut être un groupe hydrocarbure en C₁₋₁₀ dans une configuration ramifiée, linéaire, cyclique, aromatique, hétérocyclique ou hétéroaromatique et le R" du deuxième groupe OR" est une liaison directe.

5. Procédé selon l'une quelconque des revendications 1 à 4 dans lequel le rapport équivalent de fonctions acide α-oxy-carboxylique dans le composé contenant un groupe acide α-oxy-carboxylique : liaisons P-X dans le composant P-X est de de 1 : 2 à 2 : 1.

6. Procédé selon l'une quelconque des revendications 1 à 5 dans lequel
l'agent inactivateur est choisi parmi les suivants : eau, hydroxyde de lithium, hydroxyde de sodium, hydroxyde de potassium, hydroxyde de magnésium, méthanol, éthanol, n-propanol, iso-propanol, n-butanol, phénol, 2,2,2-trifluoroéthanol, triméthylsilanol, alcool allylique, éthanolate de sodium, tert-butanolate de potassium, ammoniac, lithium-amide, sodium-amide, diméthylamine, diéthylamine, di-n-propylamine, aniline, n-propylamine, iso-propylamine, n-butylamine, sec-butylamine, tert-butylamine, benzylamine, morpholine, pipéridine, acide acétique, acide benzoïque, acide propanoïque, acide n-butanoïque, acide n-pentanoïque, méthyl-lithium, tert-butyl-lithium, phényl-lithium, chlorure d'éthylmagnésium, bromure d'éthylmagnésium, chlorure de phénylmagnésium, bromure de phénylmagnésium, chlorure de vinylmagnésium, bromure de vinylmagnésium, chlorure d'allylmagnésium, 1,2-dihydroxybenzène, éthylène glycol, 1,3-propanediol, 2,2-diméthyl-1,3-propanediol, pinacol, 2,3-butanediol, 1,2-diaminobenzène, N,N'-diméthyléthylènediamine, éthanolamine, 2- (méthylamino)éthanol, glycine, alanine, phénylalanine, arginine, citrulline, acide glutamique, histidine, isoleucine, leucine, valine, lysine, ornithine, tryptophane, tyrosine, thréonine, proline, acide glycolique, acide salicylique, pentaérythritol, glucosamine, galactosamine, chitosane, chitine, alcool polyvinylique ayant un poids moléculaire compris entre 5000 et 500000, poly(acétate de vinyle) partiellement hydrolysé ayant un poids moléculaire compris entre 5000 à 500000, poly(vinyle amine) ayant un poids moléculaire compris entre 1000 à 250000, poly(vinylacétamide) partiellement hydrolysé ayant un poids moléculaire compris 1000 à 250000, poly(allylamine) ayant un poids moléculaire compris entre 1000 à 250000, poly(éthylénimine) linéaire ou ramifié ayant un poids moléculaire compris entre 1000 à 250000, 1,2-éthanedithiol, 1,3-propanedithiol, Jeffamine M-600, Jeffamine M-1000, Jeffamine M-2005, Jeffamine M-2070, Jeffamine D-230, Jeffamine D-400, Jeffamine D-2000, Jeffamine D-4000, Jeffamine HK-511, Jeffamine ED-600, Jeffamine ED-900, Jeffamine ED-2003, Jeffamine EDR-148, Jeffamine EDR-176, cellulose, amidon, fructane, galactomannane, gélose et arabinogalactone.

7. Procédé selon l'une quelconque des revendications 1 à 6 dans lequel le rapport équivalent de liaisons P-X n'ayant pas réagi dans le produit de réaction primaire du composé contenant un groupe acide α-oxy-carboxylique et du composant P-X : fonctions réactives dans l'agent inactivateur est dans la plage de de 1 : 0,1 à 1 : 10.

8. Procédé selon l'une quelconque des revendications 1 à 7 dans lequel les liaisons P-Cl ou P-Br résiduelles du produit de réaction primaire du composé contenant un groupe acide α-oxy-carboxylique avec le composant P-X sont inactivées en présence d'une base choisis parmi des amines tertiaires, des composés N-hétéroaromatiques, des composés N-hétéroaromatiques liés à une résine, des amines tertiaires liées à une résine où, par équivalent de liaison P-Cl ou P-Br résiduelle, au moins un équivalent de base est requis.

9. Procédé selon la revendication 8 dans lequel une amine est l'agent inactivateur et ladite amine est utilisée à un taux d'au moins deux équivalents par liaison P-Cl ou P-Br résiduelle.

10. Procédé selon la revendication 8 dans lequel la base est choisie parmi la triéthylamine, la pyridine, la 4-(diméthylamino)pyridine, la 2,6-lutidine, la 2-picoline, le 1,4-diazabicyclo[2.2.2]octane, le 1,8-diazabicyclo[5.4.0]undéc-7-ène, le 1,8-diazabicyclo[5.4.0]undéc-7-ène, la poly(4-vinylpyridine), la poly(2-vinylpyridine).

11. Procédé selon l'une quelconque des revendications 1 à 10 dans lequel le processus est conduit en présence d'un adjuvant choisi dans le groupe de : acides de Lewis ; acides de Br⌀nsted ; et des combinaisons de ceux-ci.

12. Procédé selon la revendication 11 dans lequel l'acide de Br⌀nsted est un acide sulfonique homogène ayant la formule
(R*(SO₃H)ₓ)
où R* est choisi parmi :
- des groupes hydrocarbures en C₁₋₂₄ de configuration linéaire, ramifiée, cyclique ou polycyclique, éventuellement substitués par des groupes F et/ou CF₃, où x est 1 à 4 ;
- des groupes aromatiques ou alkyl-aromatiques en C₆₋₁₄ dans lesquels le groupe alkyle peut être en C₆₋₂₀ où x est 1 à 3 pour des systèmes monoaromatiques et 1 à 4 pour des systèmes diaromatiques et supérieurs ;
- l'éther diphénylique ou le diphénylméthane où x est 1 ou 2 ;
- (alkyle en C₆₋₂₀)diphénylméthane où x est 1 ou 2 ;
- l'éther (alkyle en C₆₋₂₀) diphénylique où x est 1 ou 2.

13. Procédé selon la revendication 11 dans lequel l'acide de Br0nsted est un acide sulfonique hétérogène, et est choisi parmi :
- des acides sulfoniques greffés sur des résines comprenant des copolymères de styrène, d'éthylvinyle de benzène et de divinylbenzène fonctionnalisés de manière à greffer des groupes SO₃H sur les groupes aromatiques ;
- des résines perfluorées comportant des groupes acide sulfonique ;
- des acides sulfoniques déposés sur des solides ayant une paire d'électrons libre ; et
- des polymères et des solides inorganiques fonctionnalisés par greffage chimique capables de produire des acides sulfoniques.

14. Procédé selon la revendication 11 dans lequel l'adjuvant est un acide carboxylique choisi parmi des acides carboxyliques homogènes et hétérogènes.

15. Procédé selon la revendication 1 dans lequel le composé contenant un groupe acide α-oxy-carboxylique est choisi parmi les espèces -V- ou -VI- dans lesquelles les symboles ont les significations suivantes :
n est un entier choisi de 1 à 15000 ;
R¹ et R² sont indépendamment choisis parmi : des groupes hydrocarbures ayant de 1 à 20 atomes de carbone ;
R³ est choisi parmi des groupes hydrocarbures dans une configuration ramifiée, linéaire, cyclique ou hétérocyclique ayant de 1 à 30000 atomes de carbone ; lorsque n = 1, R³ peut être Y-B[-O-A]ₓ- où A est choisi parmi des hydrocarbures linéaires et ramifiés ayant de préférence de 2 à 10 atomes de carbone et B est choisi parmi des groupes hydrocarbures dans une configuration ramifiée, linéaire, cyclique, hétérocyclique, aromatique ou hétéroaromatique ayant de 1 à 50 atomes de carbone ; où Y peut représenter : -COZ, -O-COZ, -OR, -NR₂ , -SiR'₃, -Si (OR')₃, -B(OR')₂, -P⁺R'₃) -N⁺R₃,-P(O)_{z}Z₂, -NR-COZ, -N(COR')₂, -NR-CSZ, -NR-C(NR)NR₂, -CSZ, -O-CSZ, - SOyZ, -O-SO_{y}Z, -NR-SO₂R' ; où z est 0 ou 1 ;
où y est 0, 1 ou 2 ; où Z est R, -OR, -NR₂, et -NHR où R est indépendamment choisi parmi des groupes hydrocarbures dans une configuration ramifiée, linéaire, cyclique, hétérocyclique, aromatique ou hétéroaromatique ayant de 1 à 20 atomes de carbone ; R' est indépendamment choisi parmi des groupes hydrocarbures dans une configuration ramifiée, linéaire, cyclique, hétérocyclique, aromatique ou hétéroaromatique ayant de 1 à 20 atomes de carbone ; si au moins deux groupes R ou R' sont présents dans le groupe fonctionnel, alors ces groupes peuvent être reliés de sorte qu'un groupe R ou R' soit une liaison directe et l'autre soit un groupe hydrocarbure dans une configuration ramifiée, linéaire, cyclique, hétérocyclique, aromatique ou hétéroaromatique ayant de 1 à 20 atomes de carbone, si R et R' sont liés à des atomes différents, ou 2 à 20 atomes de carbone, si R et R' sont liés au même atome ; où x est 0 à 30.

16. Procédé selon la revendication 15 dans lequel :
n est un entier choisi de 1 à 5000 ;
R¹ et R² sont indépendamment choisis parmi : des groupes hydrocarbures dans une configuration ramifiée, linéaire, cyclique, aromatique, hétérocyclique ou hétéroaromatique ayant de 1 à 10 atomes de carbone ; R³ est choisi parmi des groupes hydrocarbures dans une configuration ramifiée, linéaire, cyclique, hétérocyclique ayant de 1 à 10000 atomes de carbone ; lorsque n = 1, R³ peut être Y-B[-O-A]ₓ- où x est 0 à 20 ; où A est choisi parmi des hydrocarbures linéaires et ramifiés ayant de 2 à 6 atomes de carbone et B est choisi parmi des groupes hydrocarbures dans une configuration ramifiée, linéaire, cyclique, hétérocyclique, aromatique ou hétéroaromatique ayant de 1 à 50 atomes de carbone ; Y est choisi parmi des groupes hydrocarbures dans une configuration ramifiée, linéaire, cyclique, hétérocyclique, aromatique ou hétéroaromatique ayant de 1 à 50 atomes de carbone ; où Y peut représent: -COZ, -OR, -NR₂, -Cl, -Br, -I, -O-SO_{y}Z, -N(COR')₂ ; où y est 0, 1 ou 2 ; où Z est R, -OR, -NR₂, et -NHR où R est indépendamment choisi parmi des groupes hydrocarbures dans une configuration ramifiée, linéaire, cyclique, hétérocyclique, aromatique ou hétéroaromatique ayant de 1 à 10 atomes de carbone, R' est indépendamment choisi parmi des groupes hydrocarbures dans une configuration ramifiée, linéaire, cyclique, hétérocyclique, aromatique ou hétéroaromatique ayant de 1 à 10 atomes de carbone ; si au moins deux groupes R ou R' sont présents dans le groupe fonctionnel, alors ceux-ci peuvent être reliés de sorte qu'un groupe R ou R' soit une liaison directe et l'autre soit un groupe hydrocarbure dans une configuration ramifiée, linéaire, cyclique, hétérocyclique, aromatique ou hétéroaromatique ayant de 1 à 10 atomes de carbone, si R et R' sont liés à des atomes différents, ou 2 à 10 atomes de carbone, si R et R' sont liés au même atome ; B peut également être une liaison directe lorsque Y est un groupe hydrocarbure dans une configuration ramifiée, linéaire, cyclique, hétérocyclique, aromatique ou hétéroaromatique ayant de 1 à 50 atomes de carbone ; lorsque n est 1, R³ peut être relié à R¹ et être une liaison directe, tandis que R¹ est un groupe alkylène en C₁₋₈ dans une configuration linéaire ;
lorsque m est 1, R¹ et R² peuvent également être reliés, R² étant une liaison directe et R¹ étant un groupe alkylène linéaire en C₂₋₈.

17. Procédé selon la revendication 14 dans lequel l'acide carboxylique est un acide carboxylique homogène ayant la formule :
(R**-(CO₂H)ₓ)
dans laquelle R** peut être choisi parmi des groupes hydrocarbures en C₁₋₂₄ de configuration linéaire, ramifiée, cyclique ou polycyclique, facultativement substitués par des groupes F et/ou CF₃, x est 1 à 4 ; des groupes aromatiques ou alkyl-aromatiques en C₆₋₁₄ dans lesquels le groupe alkyle peut être en C₆₋₂₀ où x est 1 à 3 pour des systèmes monoaromatiques et 1 à 4 pour des systèmes diaromatiques ; l'éther diphénylique ou le diphénylméthane où x est 1 à 2 ; (alkyle en C₆₋₂₀)diphénylméthane où x est 1 à 2 ; l'éther (alkyle en C₆₋₂₀) diphénylique où x est 1 à 2.

18. Procédé selon la revendication 11 dans lequel l'adjuvant est un acide de Lewis homogène :
- ayant la formule : MXₙ, où M représente un métal de transition ou un élément de groupe principal ; X est un anion d'un acide ou dérivé d'acide et n est égal à l'état d'oxydation de M,
- des complexes discrets de MXₙ,
- des complexes obtenus par combinaison de MXₙ avec un ligand de coordination
- des composés contenant des éléments de groupe principal, dans lesquels l'élément de groupe principal représente le site d'acide de Lewis,
- des espèces organométalliques.

19. Procédé selon la revendication 11 dans lequel l'acide de Br⌀nsted est homogène et représenté par un acide inorganique choisi parmi : H₃PO₃, H₃PO₄, l'acide polyphosphorique, l'acide métaphosphorique et des dérivés d'acide phosphonique R'P(O)(OH)₂.

20. Procédé selon la revendication 11 dans lequel l'acide de Br⌀nsted est hétérogène et est représenté par un acide inorganique choisi parmi : la silice-alumine amorphe ; des smectites ; des argiles traitées par des acides inorganiques ou organiques ; des argiles pontées ; des zéolites ; et des oxydes de métal ZrO₂-TiO₂, TiO₂-SiO₂ ; ZrO₂-SiO₂ dans des combinaisons molaires 1:1 et des acides phosphoniques liés à une résine.

21. Procédé selon l'une quelconque des revendications 1 à 20 dans lequel un solvant est présent choisi parmi : des hydrocarbures fluorés et chlorés ; des hydrocarbures aliphatiques ; des éthers ; des solvants aromatiques ; des acétates organiques ; des nitriles organiques ; des fluides de silicium ; et des liquides ioniques.

22. Procédé selon la revendication 21 dans lequel le solvant est choisi parmi les suivants : sulfolane ; anisole ; fluorobenzène ; chlorobenzène ; tétrachloroéthane ; tétrachloroéthylène ; dichloroéthane ; dichlorométhane ; diglyme ; glyme ; diphényloxyde ; dérivés de polyalkylène glycol avec des groupes OH coiffés tels que OR*** où R*** est un groupe alkyle ou acyle inférieur ; hexane ; heptane ; cyclohexane ; éther dibutylique ; éther diéthylique ; éther diisopropylique ; éther dipentylique ; éther butylméthylique ; tétrahydrofurane ; dioxane ; tétrahydropyrane ; éther cyclopentylméthylique ; toluène ; benzène ; xylène ; acétate d'éthyle ; acétonitrile ; benzonitrile ; polyméthylphénylsiloxane ; trifluorométhanesulfonate de 1-n-butyl-imidazolium, et bis(trifluorométhanesulfonyl)imide de 1-éthyl-3-méthyl-1,3-imidazolium.

23. Procédé selon la revendication 21 ou 22 dans lequel le nombre d'équivalents de fonctions acide α-oxy-carboxylique dans le composé contenant un groupe acide α-oxy-carboxylique au nombre de moles de solvant est de de 1 : 0,1 à 1 : 100.

24. Procédé selon la revendication 11 dans lequel l'acide de Lewis est hétérogène et est représenté par des sous-classes discrétionnaires créées par interaction/liaison d'acide de Lewis homogène avec des squelettes organiques ou inorganiques polymères.

25. Procédé selon l'une quelconque des revendications 1 à 24, dans lequel le composé contenant un groupe acide α-oxy-carboxylique est choisi parmi les suivants :
acide glycolique ;
acide diglycolique ;
acide méthoxyacétique ;
acide 3,6,9-trioxadécanoïque ;
acide 5-chloro-3-oxapentanoïque ;
acide 5-amino-3-oxapentanoïque ;
acide 2-tétrahydrofuroïque ;
acide 2-méthoxy-butane-1,4-dioïque.

26. Procédé selon l'une quelconque des revendications 1 à 25 dans lequel le CO gazeux libéré par la formation du composé contenant un groupe α-oxy-phosphore est collecté.

27. Procédé selon l'une quelconque des revendications 11 à 20 ou 24 dans lequel le rapport équivalent d'adjuvants choisis parmi des acides de Br⌀nsted et de Lewis aux fonctions acide α-oxy-carboxylique dans le composé contenant un groupe acide α-oxy-carboxylique est dans la plage de 0,01 : 1 à 20 : 1.
